# EUROPÄISCHE PATENTANMELDUNG

(11) **EP 1 995 034 A2**
(43) Veröffentlichungstag der Anmeldung: **26.11.2008**
(21) Anmeldenummer: 07010333.8
(22) Anmeldetag: 24.05.2007
(51) Int. Cl.: B29C 44/12, B29C 45/14, B60R 13/02

(54) **Formteil, insbesondere Dekorteil und/oder Verkleidungsteil für den Fahrzeuginnenraum, und Verfahren zur Herstellung von Formteilen**

(71) Anmelder: Novem Car Interior Design GmbH, 95519 Vorbach (DE)
(72) Erfinder: Egerer, Gerhard, 92724 Trabitz (DE); Schwenk, Roland, 95473 Creussen (DE); Vogler, Christian, 91278 Pottenstein (DE)
(74) Vertreter: Schlögl, Markus

(57) **Zusammenfassung**

Die Erfindung betrifft ein Formteil (10), insbesondere Dekorteil und/oder Verkleidungsteil für einen Fahrzeuginnenraum, umfassend einen Träger (12) aus Kunststoff, eine Dekorschicht (11) und eine duktile Einlage (14) aus duktilem Material (14a). Gemäß der Erfindung ist oder umfasst das duktile Material (14a) zur Bildung der duktilen Einlage (14) eine nichtmetallische Matte, insbesondere eine textile Matte oder eine Prepreg-Matte.

Die Erfindung betrifft ferner ein Einspritzverfahren und ein Formpressverfahren zum Herstellen von Formteilen (10), insbesondere Dekorteilen und/oder Verkleidungsteilen für einen Fahrzeuginnenraum, wobei die Formteile (10) einen Träger (12) aus Kunststoff, eine Dekorschicht (11) und eine duktile Einlage (14) aus duktilem Material (14a) umfassen.

## Beschreibung

Die Erfindung betrifft ein Formteil, insbesondere ein Dekorteil und/oder ein Verkleidungsteil für den Fahrzeuginnenraum, und ein Spritzpressverfahren und ein Formpressverfahren zum Herstellen von Formteilen, insbesondere Dekorteilen und/oder Verkleidungsteilen für einen Fahrzeuginnenraum.

Die Formteile umfassen einen Träger aus Kunststoff, eine Dekorschicht und eine duktile Einlage aus duktilem Material. Die Dekorschicht kann sich über das gesamte Formteil erstrecken, es ist aber ebenso möglich, dass sie nur einen Teilbereich des Formteils zugeordnet ist. Gleiches gilt für die duktile Einlage. Diese kann sich zumindest weitestgehend im bzw. über das gesamte Formteil erstrecken, sie kann aber auch nur in einem Teilbereich des Formteils vorgesehen sein.

Derartige Formteile werden im Fahrzeuginnenraum insbesondere in Bereichen angebracht, an denen bei einem Unfall mit dem Aufprall eines Fahrers oder Mitfahrers zu rechnen ist. Die Einlage soll hier die Verformbarkeit des Formteils insgesamt sicherstellen, d.h. ein Brechen oder Reißen bei Aufprall möglichst verhindern.

Derartige Teile sind an sich bekannt, als duktile Einlage wird ein Metall, insbesondere in Aluminium- oder Stahlblech, verwendet. Diese Metalle sind jedoch relativ schwer und tragen somit entsprechend zum Gesamtgewicht eines Fahrzeugs bei, auch entsprechen Ihre Eigenschaften hinsichtlich Festigkeit und Elastizität nicht immer den gewünschten Anforderungen.

Zur Herstellung von Dekor- oder Verkleidungsteilen für den Fahrzeuginnenraum, die lediglich eine Dekorschicht (die jedoch neben der eigentlichen Dekorlage noch weitere Konstruktions- und/oder Klebstofflagen aufweisen kann) und einen Träger aus Kunststoff umfassen, sind verschiedene Herstellungsverfahren bekannt. Gemäß einer ersten Variante wird die Dekorschicht in einem Presswerkzeug zunächst in die gewünschte Form gepresst, so dass sie eine Dekorschale bildet. Anschließend wird in einem Spritzgießwerkzeug die vorgeformte Dekorschicht bzw. die Dekorschale mit einer Kunststoff-Formmasse zur Ausbildung des Trägers hinterspritzt. Gemäß einer zweiten Variante wird zunächst der Träger in einem Spritzgießwerkzeug ausgebildet und anschließend in einem Presswerkzeug der flächige Werkstoff zur Bildung der Dekorschicht auf den Träger gepresst. Alternativ wird gemäß einer dritten Variante die vorgeformte Dekorschale zusammen mit einer Kunststoff-Formmasse in ein Presswerkzeug eingelegt und darin mittels Pressen das Formteil erzeugt. Gemäß einer vierten Variante kann zunächst der Träger in einem Presswerkzeug ausgebildet und anschließend in einem Presswerkzeug der flächige Werkstoff zur Bildung der Dekorschicht auf den Träger gepresst werden. Bereits diese Verfahren erfordern somit jeweils mindestens zwei voneinander getrennte Verfahrensschritte, die an verschiedenen Werkzeugen ausgeführt werden. Folglich sind die Verfahren zeit- und personalaufwändig und damit entsprechend kostenintensiv.

Dies gilt erst recht für hierauf aufbauende Verfahren zur Herstellung der eingangs genannten Formteile, die zusätzlich eine duktile Einlage aus duktilem Material aufweisen. Diese duktile Einlage muss zusätzlich an das Formteil angeklebt oder angepresst werden.

Gemäß einem bekannten Verfahren basiert die Herstellung dieser Formteile auf der vorgenannten zweiten Variante. Der Unterschied liegt darin, dass vor der Ausbildung des Trägers im Spritzgießwerkzeug in die Kavität des Werkzeugs zunächst das die Einlage bildende duktile Material eingebracht und positioniert wird, an das dann nach dem Schließen der Kavität die Kunststoff-Formmasse durch Einspritzen angespritzt wird. In diesem ersten Schritt entsteht somit eine Verbundeinheit aus Kunststoff-Träger und Einlage aus duktilem Material. Anschließend wird wie in der vorbeschriebenen zweiten Variante in einem Presswerkzeug der flächige Werkstoff zur Bildung der Dekorschicht auf den Träger gepresst.

Der vorliegenden Erfindung liegt die Aufgabe zugrunde, ein alternatives Formteil mit duktiler Einlage anzugeben, das verbesserte Eigenschaften, insbesondere hinsichtlich Gewicht und/oder Festigkeit und/oder Elastizität, aufweist. Des Weiteren sollen verbesserte Verfahren zur Herstellung von Formteile mit duktiler Einlage angeben werden. Insbesondere sollen diese Verfahren die Produktivität erhöhen und die Produktionskosten senken.

Diese Aufgabe wird hinsichtlich des Formteils gelöst durch die Merkmale des Anspruchs 1 und hinsichtlich des Verfahrens durch die Merkmale des Anspruchs 2 oder durch die Merkmale des Anspruchs 12. Vorteilhafte Ausgestaltungen und Weiterbildungen sind in den von Anspruch 1, 2 und 12 abhängigen Ansprüchen angegeben.

Bei dem erfindungsgemäßen Formteil ist oder umfasst das duktile Material zur Bildung der duktilen Einlage eine nichtmetallische Matte, insbesondere eine textile Matte oder eine Prepreg-Matte.

Textile Matten sind technische Textilien, d.h. sie sind aus Fasern hergestellt. Sie sind stabil und gleichzeitig flexibel, weisen eine große Festigkeit und ein hohes Elastizitätsmodul (E-Modul) auf und sind leicht beispielsweise im Vergleich zu Metallen. "Prepreg" ist die Kurzform für "preimpregnated fibres" (vorimprägnierte Fasern). Prepregs bestehen aus Faser-Geweben oder Faser-Gelegen, die mit Harzen imprägniert sind, beispielsweise aus Langfaser-Geweben bzw. -Gelegen, aus schlingenförmig gelegten Endlosfasern oder aus Kombinationen hieraus. Als Fasertyp sind beispielsweise Carbon- bzw. Kohlenstofffaser, Glasfaser, Naturfaser und Kunststofffaser wie Aramidfaser geeignet. Als Harz kommen unter anderem Epoxid-, Polyester- und Phenolharz in Betracht. Insbesondere der Fasertyp bestimmt als wesentlichen Eigenschaften die Festigkeit und das Elastizitätsmodul (E-Modul) des Prepregs und damit der Prepreg-Matte. Prepreg-Matten sind stabil, weisen eine große Festigkeit und ein hohes Elastizitätsmodul (E-Modul) auf und sind leicht beispielsweise im Vergleich zu Metallen.

Dementsprechend liegen die Vorteile der erfindungsgemäßen Formteile insbesondere in ihrem leichten Gewicht, vor allem im Vergleich zur Verwendung von Metall als duktiles Material zur Bildung der duktilen Einlage. Ferner weist das Formteil insgesamt eine hohe Festigkeit bei gleichzeitig großer Elastizität aus, insbesondere wiederum im Vergleich zur Verwendung von Metall als duktiles Material zur Bildung der duktilen Einlage.

Die Matten, die gemäß der Erfindung zur Bildung der duktilen Einlage verwendet werden, werden beispielsweise auf Rollen oder in Plattenform angeliefert und bei der Herstellung der Formteile entsprechend eingesetzt. Typische Materialstärken der Matten liegen im Bereich von 0,2 mm bis 2,0 mm, insbesondere bei etwa 0,5 mm. Die Matten können imprägniert sein, beispielsweise mit Materialien auf Basis von Epoxid-, Acrylat- oder ungesättigten Polyesterharzen.

Bei dem erfindungsgemäßen Verfahren zur Herstellung der eingangs genannten Formteile, insbesondere der vorgenannten erfindungsgemäßen Formteile, handelt es sich gemäß einer ersten Variante um ein Einspritzverfahren. Hierbei wird ein die Dekorschicht bildender Werkstoff und das duktile Material zur Bildung der duktilen Einlage in eine geöffnete Kavität eines Spritzgießwerkzeugs eingelegt und/oder darin positioniert. Der die Dekorschicht bildende Werkstoff und das duktile Material sind somit gemeinsam in der Kavität angeordnet, bevor das Werkzeug weitere Arbeitsschritte ausführt. Grundsätzlich kommt es hierbei nicht darauf an, ob zuerst der Werkstoff oder das duktile Material oder gar beide gleichzeitig in die Kavität eingelegt und/oder darin positioniert werden.

Nach dem Einlegen und/oder Positionieren von Werkstoff und duktilem Material wird in einem weiteren Verfahrensschritt die Kavität des Spritzgießwerkzeugs geschlossen. In die Kavität wird nach dem Schließen eine den Träger des Formteils ausbildende Kunststoff-Formmasse eingespritzt. Diese eingespritzte Kunststoff-Formmasse erstarrt (z.B. bei thermoplastischen Kunststoff-Formmassen) bzw. härtet aus (z.B. bei duroplastischen Kunststoff-Formmassen) und bildet zusammen mit dem die Dekorschicht bildenden Werkstoff und dem duktilen Material zur Bildung der duktilen Einlage das herzustellende Formteil.

Die Vorteile dieses Verfahrens liegen insbesondere darin, dass die Herstellung des Formteils, das eine Dekorschicht, einen Träger und eine duktile Einlage umfasst, aus dem Werkstoff zur Bildung der Dekorschicht, aus der Kunststoff-Formmasse zur Bildung des Trägers und aus dem duktilen Material in nur einem Werkzeug und mit nur einem Schließzyklus dieses Werkzeugs erfolgt. Dies gelingt dadurch, dass zunächst beide Komponenten, der Werkstoff zur Bildung der Dekorschicht und das duktiles Material, in die Kavität des Spritzgießwerkzeugs eingelegt werden und das Spritzgießwerkzeug erst im Anschluss hieran zugefahren und der Einspritzvorgang ausgeführt wird. In diesem einen Herstellungsschritt werden somit nicht nur zwei der drei Hauptkomponenten des Formteils miteinander verbunden, wie bei dem eingangs beschriebenen Verfahren, sondern gleich alle drei Hauptkomponenten. Es entfällt somit zumindest ein Verfahrensschritt, des Weiteren kann die Herstellung des Formteils aus den genannten drei Komponenten an lediglich einem Werkzeug erfolgen. Dies trägt erheblich zur Steigerung der Produktivität und damit zur Reduzierung der Produktionskosten bei.

Vorteilhafterweise ist bei der Einbringung und/oder Positionierung eine geeignete Fixierung des Werkstoffs zur Bildung der Dekorschicht und/oder des duktilen Materials in der Kavität des Spritzgießwerkzeugs vorgesehen. Diesbezügliche Verfahren sind bekannt. Beispielsweise können mechanisch bewegliche Stifte, z.B. mit einem Durchmesser von etwa 5 mm, an überstehenden Bereichen (Abfallbereichen) als Haltevorrichtung angreifen. Es können aber auch indirekte Rückhaltesysteme vorgesehen sein, beispielsweise die Ausbildung bzw. Anordnung von für die Luftdurchführung geeigneten Bohrungen oder porösen Materialien im Werkzeug, über die Luft abgesaugt wird und aufgrund des dadurch entstehenden Unterdrucks der Werkstoff bzw. das Material am Werkzeug gehalten wird.

Gemäß einer ersten Weiterbildung des Verfahrens ist vorgesehen, dass der die Dekorschicht bildende Werkstoff beim Einlegen in die Kavität und/oder beim Positionieren in der Kavität flächig ausgebildet ist und/oder noch nicht entsprechend seiner späteren Form im Formteil ausgebildet ist. Beispielsweise wird der flächige Werkstoff, zumeist ein Schichtverbundwerkstoff aus einer Dekorlage, ohne weitere Verformungsschritte in seiner flächigen Ausbildung in die Kavität des Spritzgusswerkzeugs eingelegt und dort positioniert. Lediglich ein Zuschnitt und/oder ein Ausbilden bzw. Ausstanzen von Durchführungen und/oder ein Einbringen von Vertiefungen kann vorab erforderlich sein. Die eigentliche Formgebung zur Ausbildung der Dekorschicht des Formteils erfolgt dann im Spritzgießwerkzeug im Zusammenhang mit der Ausbildung des gesamten Formteils. Der Vorteil liegt somit insbesondere darin, dass auch die Formung der Dekorschicht im Rahmen eines gemeinsamen Arbeitsvorgangs an nur einem Werkzeug erfolgt und somit ein der eigentlichen Formteilherstellung vorgeschalteter Arbeitsvorgang zur Formung der Dekorschicht an einem eigenen Presswerkzeug entfällt, was eine zusätzliche Steigerung der Produktivität mit sich bringt.

In einer Ausführungsvariante kann hierbei der eingelegte und/oder positionierte Werkstoff beim Schließen der Kavität bereits angeformt werden, insbesondere durch Komponenten des Werkzeugs und/oder hieran angelegtes Material, und zwar in Richtung auf seine spätere Form im Formteil. Das Werkzeug besteht üblicherweise aus zumindest zwei Werkzeugteilen, üblicherweise einer Düsenseite und einer Auswerferseite, die zum Spritzgießen zusammengefahren werden und zwischen sich die Kavität ausbilden. Beispielsweise kann der auf Seiten der Düsenseite in der Kavität positionierte Werkstoff beim Zufahren des Werkzeugs durch hervorstehende Formgebungskomponenten der Auswerferseite bzw. hieran angelegtes Material in eine Formgebungsausnehmung der Düsenseite hineingedrückt bzw. hineingebogen werden. Dadurch wird der Werkstoff bereits beim Schließen der Kavität in Richtung auf seine Endform als geformte Dekorschicht angeformt. Dies kann sich als vorteilhaft bei der nachfolgend beschriebenen eigentlichen Formgebung durch das Spritzgießen erweisen.

Bei einer weiteren, alternativen oder additiven Ausführungsvariante zur ersten Weiterbildung des erfindungsgemäßen Verfahrens ist vorgesehen, dass beim Einspritzen der Kunststoff-Formmasse der von der Kunststoff-Formmasse ausgehende Druck den Werkstoff gegen die Kavitätswandung drückt und damit die Dekorschicht des Formteils in einer durch die Kavitätswandung vorgegebenen Form ausgebildet wird. Die Kavitätswandung, insbesondere die Formgebungsausnehmung der Düsenseite des Werkzeugs, stellt somit eine Negativform der vorgesehenen Form der Dekorseite des herzustellenden Formteils dar. Der Werkstoff wird durch die unter Druck stehende, eingespritzte Kunststoff-Formmasse in diese Negativform gepresst und erhält dadurch die vorgesehene Dekorschicht-Form. Beim Einspritzen erfolgt somit nicht nur die Ausbildung des Trägers, sondern auch die Formung der Dekorschicht. Dementsprechend kann dieses Verfahren auch als Spritzpressverfahren oder als One-Step-Verfahren bezeichnet werden.

Gemäß einer zweiten, zur ersten Weiterbildung alternativen Weiterbildung des Verfahrens ist vorgesehen, dass der die Dekorschicht bildende Werkstoff vor dem Einlegen in die Kavität und/oder vor dem Positionieren in der Kavität vorgeformt wird entsprechend seiner späteren Form im Formteil. Dies kann beispielsweise in einem Presswerkzeug erfolgen. Diese Vorform des Werkstoffs korrespondiert dann beim Einlegen und/oder Positionieren mit der Form der Kavität des Spritzgießwerkzeugs. Der vorgeformte Werkstoff wird auch als Dekorschale bezeichnet.

Bei dem erfindungsgemäßen Verfahren kann alternativ oder additiv zu den vorbeschriebenen Weiterbildungen gemäß einer dritten Weiterbildung vorgesehen sein, dass das duktile Material zur Bildung der duktilen Einlage beim Einlegen in die Kavität und/oder beim Positionieren in der Kavität flächig ausgebildet ist und/oder noch nicht entsprechend seiner späteren Form im Formteil ausgebildet ist. Beispielsweise wird das flächige Material, z.B. ein Metallblech oder eine nichtmetallische Matte, ohne weitere Verformungsschritte in seiner flächigen Ausbildung in die Kavität des Spritzgusswerkzeugs eingelegt und dort positioniert. Lediglich ein Zuschnitt und/oder ein Ausbilden bzw. Ausstanzen von Durchführungen und/oder ein Einbringen von Vertiefungen kann vorab erforderlich sein. Die eigentliche Formgebung zur Ausbildung der duktilen Einlage des Formteils erfolgt dann im Spritzgießwerkzeug im Zusammenhang mit der Ausbildung des gesamten Formteils. Der Vorteil liegt somit auch hier insbesondere darin, dass die Formung der Einlage im Rahmen eines gemeinsamen Arbeitsvorgangs an nur einem Werkzeug erfolgt und somit ein der eigentlichen Formteilherstellung vorgeschalteter Arbeitsvorgang zur Formung der Einlage an einem eigenen Presswerkzeug entfällt, was eine zusätzliche Steigerung der Produktivität mit sich bringt.

In einer Ausführungsvariante kann hierbei das eingelegte und/oder positionierte duktile Material beim Schließen der Kavität bereits angeformt werden, insbesondere durch Komponenten des Werkzeugs und/oder durch einen hieran angelegten Werkstoff, und zwar in Richtung auf seine spätere Form im Formteil. Beispielsweise kann das auf Seiten der Auswerferseite in der Kavität positionierte duktile Material beim Zufahren des Werkzeugs durch hervorstehende Formgebungskomponenten der Düsenseite bzw. einen hieran angelegten Werkstoff in eine entsprechende Negativform der Auswerferseite hineingedrückt bzw. hineingebogen werden. Dadurch wird das duktile Material bereits beim Schließen der Kavität in Richtung auf seine Endform als duktile Einlage angeformt. Dies kann sich als vorteilhaft bei der nachfolgend beschriebenen eigentlichen Formgebung durch das Spritzgießen erweisen.

Bei einer weiteren, alternativen oder additiven Ausführungsvariante zur dritten Weiterbildung des erfindungsgemäßen Verfahrens ist vorgesehen, dass beim Einspritzen der Kunststoff-Formmasse der von der Kunststoff-Formmasse ausgehende Druck das duktile Material gegen die Kavitätswandung drückt und damit die duktile Einlage des Formteils in einer durch die Kavitätswandung vorgegebenen Form ausgebildet wird. Die Kavitätswandung, insbesondere auf der Auswerferseite des Werkszeugs, stellt somit eine Negativform der vorgesehenen Form der duktilen Einlage des herzustellenden Formteils dar. Das duktile Material, üblicherweise ein Metallblech, wird durch die unter Druck stehende, eingespritzte Kunststoff-Formmasse in diese Negativform gepresst und erhält dadurch die vorgesehene Einlagenform.

Gemäß einer vierten, zur dritten Weiterbildung alternativen Weiterbildung des Verfahrens ist vorgesehen, dass das die duktile Einlage bildende Material vor dem Einlegen in die Kavität und/oder vor dem Positionieren in der Kavität vorgeformt wird entsprechend seiner späteren Form im Formteil. Dies kann beispielsweise in einem Presswerkzeug erfolgen. Diese Vorform des duktilen Materials korrespondiert dann beim Einlegen und/oder Positionieren mit der Form der Kavität des Spritzgießwerkzeugs.

Die Kunststoff-Formmasse, die nach dem Einspritzen den Träger des Formteils bildet, kann sowohl ein Thermoplast, beispielsweise PE, PP, ABS, PA, PPA oder ein Kunststoff-Blendsystem, beispielsweise ein ABS/PC-Blend, als auch ein Elastomer oder ein Duroplast sein.

Beim Einspritzen von Thermoplasten weist die Kunststoff-Formmasse üblicherweise eine Temperatur von etwa 250°C bis 260°C auf, das Werkzeug selbst weist eine Temperatur zwischen 40°C und 120°C auf, vorzugsweise etwa 80°C.

Beim Einspritzen von Duroplasten ist die Kunststoff-Formmasse üblicherweise kalt, das heißt sie weist etwas Raumtemperatur auf, das Werkzeug selbst weist eine Temperatur zwischen 80°C und 180°C auf, vorzugsweise etwa 150°C.

Bei dem erfindungsgemäßen Verfahren zur Herstellung der eingangs genannten Formteile, insbesondere der vorgenannten erfindungsgemäßen Formteile, kann es sich alternativ gemäß einer zweiten Variante auch um ein Formpressverfahren handeln. Hierbei wird ein die Dekorschicht bildender Werkstoff, eine den Träger bildende Kunststoff-Formmasse und das duktile Material zur Bildung der duktilen Einlage in einen geöffneten Formraum eines Formpresswerkzeugs eingelegt und/oder darin positioniert. Der die Dekorschicht bildende Werkstoff, die Kunststoff-Formmasse und das duktile Material sind somit gemeinsam in dem geöffneten Formraum angeordnet, bevor das Werkzeug weitere Arbeitsschritte ausführt. Grundsätzlich kommt es hierbei nicht darauf an, ob zuerst der Werkstoff, die Kunststoff-Formmasse oder das duktile Material oder gar alle gleichzeitig in den geöffneten Formraum eingelegt und/oder darin positioniert werden, gegebenenfalls ergibt sich die Reihenfolge aus der vorgesehenen Anordnung der Materialien im Formteil. Beispielsweise kann zunächst das duktile Material einzulegen sein, um hierauf dann die Kunststoff-Formmasse anordnen zu können.

Nach dem Einlegen und/oder Positionieren von Werkstoff und duktilem Material wird in einem weiteren Verfahrensschritt der Formraum des Formpresswerkzeugs geschlossen. Hierbei werden der die Dekorschicht bildende Werkstoff und/oder die den Träger bildende Kunststoff-Formmasse und/oder das duktile Material zur Bildung der duktilen Einlage in die durch den Formraum vorgegebene Form gepresst. Anschließend erstarrt die Kunststoff-Formmasse (z.B. bei thermoplastischen Kunststoff-Formmassen) oder härtet die Kunststoff-Formmasse aus (z.B. bei duroplastischen Kunststoff-Formmassen) und bildet zusammen mit dem die Dekorschicht bildenden Werkstoff und dem duktilen Material zur Bildung der duktilen Einlage das herzustellende Formteil.

Die Vorteile dieses Verfahrens liegen insbesondere darin, dass die Herstellung des Formteils, das eine Dekorschicht, einen Träger und eine duktile Einlage umfasst, aus dem Werkstoff zur Bildung der Dekorschicht, aus der Kunststoff-Formmasse zur Bildung des Trägers und aus dem duktilen Material in nur einem Werkzeug und mit nur einem Schließzyklus bzw. Presszyklus dieses Werkzeugs erfolgt. Dies gelingt dadurch, dass zunächst alle drei Komponenten, der Werkstoff zur Bildung der Dekorschicht, die Kunststoff-Formmasse und das duktiles Material, in den Formraum des Formpresswerkzeugs eingelegt werden und das Formpresswerkzeug erst im Anschluss hieran zugefahren und dadurch der Formpressvorgang ausgeführt wird. In diesem einen Herstellungsschritt werden somit gleich alle drei Hauptkomponenten des Formteils miteinander verbunden, mehrere Einzelschritte sind nicht erforderlich. Des Weiteren kann die Herstellung des Formteils aus den genannten drei Komponenten an lediglich einem Werkzeug erfolgen. Dies trägt erheblich zur Steigerung der Produktivität und damit zur Reduzierung der Produktionskosten bei.

Das Formpresswerkzeug besteht üblicherweise aus zumindest zwei Werkzeugteilen, einen Oberteil und einem Unterteil. Diese können auseinander und aufeinander zu bewegt werden. Zwischen Ober- und Unterteil ist der Formraum ausgebildet, im geschlossenen Zustand von Ober- und Unterteil ein Hohlraum, der durch das Auseinanderfahren von Ober- und Unterteil geöffnet wird, so dass die einzelnen Komponenten und Materialien eingelegt werde können. Beim Zufahren von Ober- und Unterteil erfolgt der formgebende Pressvorgang. Die Form der hierbei entstehenden Formteile wird bestimmt durch die Form des Formraums, diese stellt eine Negativform des Formteils dar.

Das Formpressverfahren kann auch als Kompressionsformverfahren oder compression moulding bezeichnet werden. Im Unterschied zum Spritzgießverfahren bzw. injection moulding, bei der das Werkzeug lediglich ein Füllwerkzeug ist, das vor dem eigentlichen Vorgang, dem Einspritzen, geschlossen wird, ist das Werkzeug beim Formpressverfahren ein Arbeitswerkzeug, das heißt durch die Schließbewegung des Werkzeugs erfolgt die Formgebung.

Vorteilhafterweise ist bei der Einbringung und/oder Positionierung eine geeignete Fixierung des Werkstoffs zur Bildung der Dekorschicht und/oder der Kunststoff-Formmasse und/oder des duktilen Materials im geöffneten Formraum des Formpresswerkzeugs vorgesehen. Diesbezügliche Verfahren sind bekannt. Beispielsweise können mechanisch bewegliche Stifte, z.B. mit einem Durchmesser von etwa 5 mm, an überstehenden Bereichen (Abfallbereichen) als Haltevorrichtung angreifen. Es können aber auch indirekte Rückhaltesysteme vorgesehen sein, beispielsweise die Ausbildung bzw. Anordnung von für die Luftdurchführung geeigneten Bohrungen oder porösen Materialien im Werkzeug, über die Luft abgesaugt wird und aufgrund des dadurch entstehenden Unterdrucks der Werkstoff bzw. das Material am Werkzeug gehalten wird.

Gemäß einer ersten Weiterbildung des Verfahrens ist vorgesehen, dass der die Dekorschicht bildende Werkstoff beim Einlegen in den geöffneten Formraum und/oder beim Positionieren in dem geöffneten Formraum flächig ausgebildet ist und/oder noch nicht entsprechend seiner späteren Form im Formteil ausgebildet ist. Beispielsweise wird der flächige Werkstoff, zumeist ein Schichtverbundwerkstoff aus einer Dekorlage, ohne weitere Verformungsschritte in seiner flächigen Ausbildung in den geöffneten Formraum des Formpresswerkzeugs eingelegt und dort positioniert. Lediglich ein Zuschnitt und/oder ein Ausbilden bzw. Ausstanzen von Durchführungen und/oder ein Einbringen von Vertiefungen kann vorab erforderlich sein. Die eigentliche Formgebung zur Ausbildung der Dekorschicht des Formteils erfolgt dann im Formpresswerkzeug im Zusammenhang mit der Ausbildung des gesamten Formteils. Der Vorteil liegt somit insbesondere darin, dass auch die Formung der Dekorschicht im Rahmen eines gemeinsamen Arbeitsvorgangs an nur einem Werkzeug erfolgt und somit ein der eigentlichen Formteilherstellung vorgeschalteter Arbeitsvorgang zur Formung der Dekorschicht an einem eigenen Presswerkzeug entfällt, was eine zusätzliche Steigerung der Produktivität mit sich bringt.

Bei einer Ausführungsvariante zur ersten Weiterbildung des erfindungsgemäßen Verfahrens ist vorgesehen, dass beim Pressen der Kunststoff-Formmasse durch das Schließen des Formpresswerkzeugs der von der Kunststoff-Formmasse ausgehende Druck den Werkstoff gegen die Formraumwandung drückt und damit die Dekorschicht des Formteils in einer durch die Formraumwandung vorgegebenen Form ausgebildet wird. Die Formraumwandung stellt somit zumindest abschnittsweise eine Negativform der vorgesehenen Form der Dekorseite des herzustellenden Formteils dar. Der Werkstoff wird durch die unter Druck stehende, gepresste Kunststoff-Formmasse in diese Negativform gepresst und erhält dadurch die vorgesehene Dekorschicht-Form. Beim Formpressen erfolgt somit nicht nur die Ausbildung des Trägers, sondern auch die Formung der Dekorschicht. Dementsprechend kann dieses Verfahren auch als One-Step-Verfahren bezeichnet werden.

Gemäß einer zweiten, zur ersten Weiterbildung alternativen Weiterbildung des Verfahrens ist vorgesehen, dass der die Dekorschicht bildende Werkstoff vor dem Einlegen in den Formraum und/oder vor dem Positionieren in dem Formraum vorgeformt wird entsprechend seiner späteren Form im Formteil. Dies kann beispielsweise in einem Presswerkzeug erfolgen. Diese Vorform des Werkstoffs korrespondiert dann beim Einlegen und/oder Positionieren mit der Form des Formraums des Pressformwerkzeugs. Der vorgeformte Werkstoff wird auch als Dekorschale bezeichnet.

Bei dem erfindungsgemäßen Verfahren kann alternativ oder additiv zu den vorbeschriebenen Weiterbildungen gemäß einer dritten Weiterbildung vorgesehen sein, dass das duktile Material zur Bildung der duktilen Einlage beim Einlegen in den geöffneten Formraum und/oder beim Positionieren in dem geöffneten Formraum flächig ausgebildet ist und/oder noch nicht entsprechend seiner späteren Form im Formteil ausgebildet ist. Beispielsweise wird das flächige Material, z.B. ein Metallblech oder eine nichtmetallische Matte, ohne weitere Verformungsschritte in seiner flächigen Ausbildung in den Formraum des Formpresswerkzeugs eingelegt und dort positioniert. Lediglich ein Zuschnitt und/oder ein Ausbilden bzw. Ausstanzen von Durchführungen und/oder ein Einbringen von Vertiefungen kann vorab erforderlich sein. Die eigentliche Formgebung zur Ausbildung der duktilen Einlage des Formteils erfolgt dann im Formpresswerkzeug im Zusammenhang mit der Ausbildung des gesamten Formteils. Der Vorteil liegt somit auch hier insbesondere darin, dass die Formung der Einlage im Rahmen eines gemeinsamen Arbeitsvorgangs an nur einem Werkzeug erfolgt und somit ein der eigentlichen Formteilherstellung vorgeschalteter Arbeitsvorgang zur Formung der Einlage an einem eigenen Presswerkzeug entfällt, was eine zusätzliche Steigerung der Produktivität mit sich bringt.

Bei einer Ausführungsvariante zur dritten Weiterbildung des erfindungsgemäßen Verfahrens ist vorgesehen, dass beim Pressen der Kunststoff-Formmasse durch das Schließen des Formpresswerkzeugs der von der Kunststoff-Formmasse ausgehende Druck das duktile Material gegen die Formraumwandung drückt und damit die duktile Einlage des Formteils in einer durch die Formraumwandung vorgegebenen Form ausgebildet wird. Die Formraumwandung stellt somit zumindest abschnittsweise eine Negativform der vorgesehenen Form der duktilen Einlage des herzustellenden Formteils dar. Das duktile Material, üblicherweise ein Metallblech, wird durch die unter Druck stehende, eingespritzte Kunststoff-Formmasse in diese Negativform gepresst und erhält dadurch die vorgesehene Einlagenform.

Gemäß einer vierten, zur dritten Weiterbildung alternativen Weiterbildung des Verfahrens ist vorgesehen, dass das die duktile Einlage bildende Material vor dem Einlegen in den geöffneten Formraum und/oder vor dem Positionieren in dem geöffneten Formraum vorgeformt wird entsprechend seiner späteren Form im Formteil. Dies kann beispielsweise in einem Presswerkzeug erfolgen. Diese Vorform des duktilen Materials korrespondiert dann beim Einlegen und/oder Positionieren mit der Form des Formraums des Pressformwerkzeugs.

Bei der Kunststoff-Formmasse, die den Träger des Formteils bildet, kann es sich um BMC (Bulk moulding compound), um SMC (Sheet moulding compound) oder um GFK (glasfaserverstärkter Kunststoff), beispielsweise GMT (glasmattenverstärkter Thermoplast) handeln.

Je nach Art der Kunststoff-Formmasse spricht man dann von einem BMC-Pressverfahren bzw. einer BMC-Verarbeitung, von einem SMC-Pressverfahren bzw. einer SMC-Verarbeitung, usw.

Als Kunststoffe der Kunststoff-Formmasse kommen sowohl Thermoplaste, beispielsweise PP, ABS, PA, PPA oder ein Kunststoff-Blendsystem, beispielsweise ein ABS/PC-Blend, als auch Elastomere oder Duroplaste, beispielsweise auf einer Harzbasis, z.B. auf Basis ungesättigter Polyesterharze, in Betacht.

Bevorzugt handelt es sich bei der Kunststoff-Formmasse, die mit dem Werkstoff zur Bildung der Dekorschicht und dem duktilen Material in den Formraum des Formpresswerkzeugs eingelegt wird, im Wesentlichen um eine Art planare Matte bzw. ein Sheet.

Bei allen erfindungsgemäßen Verfahren kann vorgesehen sein, dass das duktile Material zur Bildung der duktilen Einlage ein Metallblech ist, insbesondere ein Aluminium- oder Stahlblech. Das duktile Material kann aber auch eine nichtmetallische Matte, insbesondere eine textile Matte oder eine Prepreg-Matte, sein oder umfassen. Diesbezüglich sein auf vorhergehende Erläuterungen verwiesen.

Bei allen erfindungsgemäßen Verfahren kann auch vorgesehen sein, dass das duktile Material zur Bildung der duktilen Einlage eine oder mehrere hinterschnittene erste Vertiefungen und/oder erste Durchbrechungen aufweist, in die die Kunststoff-Formmasse beim Einspritzen oder Formpressen eindringt und somit beim Erstarren bzw. Aushärten eine feste Verbindung zwischen dem von der Kunststoff-Formmasse gebildeten Träger und der duktilen Einlage ausbildet. Auch dies stellt eine stabile und dauerhafte Einbettung bzw. Anbindung der duktilen Einlage in bzw. an das Formteil sicher.

Ferner kann das duktile Material mindestens eine zweite Durchbrechung aufweisen, durch die Kunststoff-Formmasse beim Einspritzen oder Formpressen in mindestens einen an die Kavität bzw. Formraum angrenzenden Formabschnitt des Werkzeugs eintritt zur Ausbildung mindestens eines Befestigungselements am Träger des Formteils, bestimmt für die Anbringung des Formteils, insbesondere im Fahrzeuginnenraum. Dies ermöglicht Befestigungselemente, beispielsweise längliche Befestigungsstifte oder Befestigungsflächen mit Ösen, die einstückig mit dem Träger ausgebildet sind. Bei der Anbringung im Fahrzeuginnenraum korrespondieren dies Befestigungselemente mit entsprechenden Befestigungselementen an den Komponenten, auf die die Formteile aufzubringen sind, beispielsweise mit Rasthaken und Rastnasen, die mit den Ösen der Befestigungsstifte und Befestigungsflächen korrespondieren. Da diese Befestigungselemente die duktile Einlage durchdringen, sorgen sie gleichzeitig für eine feste Verbindung zwischen Träger und Einlage und damit für eine stabile und dauerhafte Einbettung bzw. Anbindung der Einlage in bzw. an das Formteil.

Nach der Fertigstellung des Formteils im Spritzgießwerkzeug bzw. im Formpresswerkzeugs kann dieses noch durch weitere Verfahrensschritte nachbearbeitet werden. Beispielsweise können Schneid- und/oder Schleifprozesse, eine Bearbeitung der Sichtfläche der Dekorschicht und/oder die Aufbringung einer Oberflächenbeschichtung, beispielsweise einer Lackierung, vorgesehen sein.

Bei dem erfindungsgemäßen Formteil und bei allen erfindungsgemäßen Verfahren kann vorgesehen sein, dass der die Dekorschicht bildenden Werkstoffs ein Verbundwerkstoff, insbesondere ein Schichtverbundwerkstoff, ist, der eine Dekorlage umfasst. Die Dekorlage kann hierbei beispielsweise ein Holzfurnier, eine Metalllage, eine Folie, vorzugsweise eine Kunststoffund/oder Metallfolie, und/oder eine Textillage bzw. ein Stoff sein.

Der die Dekorschicht bildende Werkstoff kann gemäß einer Variante drei Lagen umfassen, neben der Dekorlage als weitere Lagen eine Klebstofflage und eine über die Klebstofflage an der Dekorschicht angebundene Schutzschicht, insbesondere eine Textilmatte auf Faserbasis oder eine Vlieslage oder eine thermoplastische Kunststofflage oder eine Folie auf Kunststoffund/oder Faserbasis oder ein Furnier. Die Schutzschicht verhindert, dass empfindliche Dekorlagen, beispielsweise aus Holzfurnier, Folie oder Textilien, beim Spritzgieß- bzw. Formpressvorgang aufgrund des Drucks der Kunststoff-Formmasse beschädigt werden. Ohne Schutzschicht könnte die Dekorlage beispielsweise aufgrund des hohen Drucks der Formmasse reißen. Ferner dient die Schutzschicht auch der Anbindung zwischen dem die Dekorschicht bildenden Werkstoff und der Kunststoff-Formmasse beim Formpressen und damit der Anbindung der Dekorschicht an dem Träger.

Gemäß einer weiteren Variante kann der die Dekorschicht bildende Werkstoff zwei Lagen umfassen, neben der Dekorlage noch eine Klebstofflage. Die Klebstofflage bildet beim Pressen der Kunststoff-Formmasse und/oder beim Erstarren bzw. Aushärten der Kunststoff-Formmasse eine feste Verbindung zwischen dem von der Kunststoff-Formmasse gebildeten Träger und der Dekorschicht.

Die Erfindung wird nachstehend auch hinsichtlich weiterer Merkmale und Vorteile anhand der Beschreibung von Ausführungsbeispielen und unter Bezugnahme auf die beiliegenden, schematischen Zeichnungen näher erläutert. Dabei zeigen
- FIG 1a und FIG 1b: in einer schematischen Querschnittsdarstellung jeweils ein Ausführungsbeispiel eines erfindungsgemäßen Formteils,
- FIG 2a: in einer schematischen Querschnittdarstellung einen Ausschnitt eines Ausführungsbeispiels eines Werkstoffs zur Bildung einer Dekorschicht des Formteils,
- FIG 2b: in einer schematischen Querschnittdarstellung einen Ausschnitt eines alternativen Ausführungsbeispiels eines Werkstoffs zur Bildung einer Dekorschicht des Formteils,
- FIG 3: in einer schematischen Schnittdarstellung ein Ausführungsbeispiel eines für die Durchführung des erfindungsgemäßen Verfahrens geeigneten Spritzgießwerkzeugs,
- FIG 4a bis FIG 4c: jeweils anhand einer schematischen Querschnittsdarstellung des Spritzgießwerkzeugs gemäß FIG 3 aufeinanderfolgende Verfahrensstufen einer Ausführungsvariante des erfindungsgemäßen Spritzgießverfahrens,
- FIG 5a bis FIG 5c: jeweils anhand einer schematischen Querschnittsdarstellung des Spritzgießwerkzeugs gemäß FIG 3 aufeinanderfolgende Verfah rensstufen einer alternativen Ausführungsvariante des erfindungsgemäßen Spritzgießerfahrens.
- FIG 6: in einer schematischen Schnittdarstellung ein Ausführungsbeispiel eines für die Durchführung des erfindungsgemäßen Verfahrens geeigneten Formpresswerkzeugs,
- FIG 7a und FIG 7b: jeweils anhand einer schematischen Querschnittsdarstellung des Formpresswerkzeugs gemäß FIG 6 aufeinanderfolgende Verfahrensstufen einer Ausführungsvariante des erfindungsgemäßen Formpressverfahrens, und
- FIG 8a und FIG 8b: jeweils anhand einer schematischen Querschnittsdarstellung des Formpresswerkzeugs gemäß FIG 6 aufeinanderfolgende Verfahrensstufen einer alternativen Ausführungsvariante des erfindungsgemäßen Formpressverfahrens.

Einander entsprechende Komponenten und Teile sind in den Figuren, auch über verschiedene Werkzeuge (jeweils Bezugszeichen 1) für das Spritzgießverfahren und das Formpressverfahren und die daraus hervorgehenden verschiedenen Formteile (jeweils Bezugszeichen 10) hinweg, mit den gleichen Bezugszeichen bezeichnet.

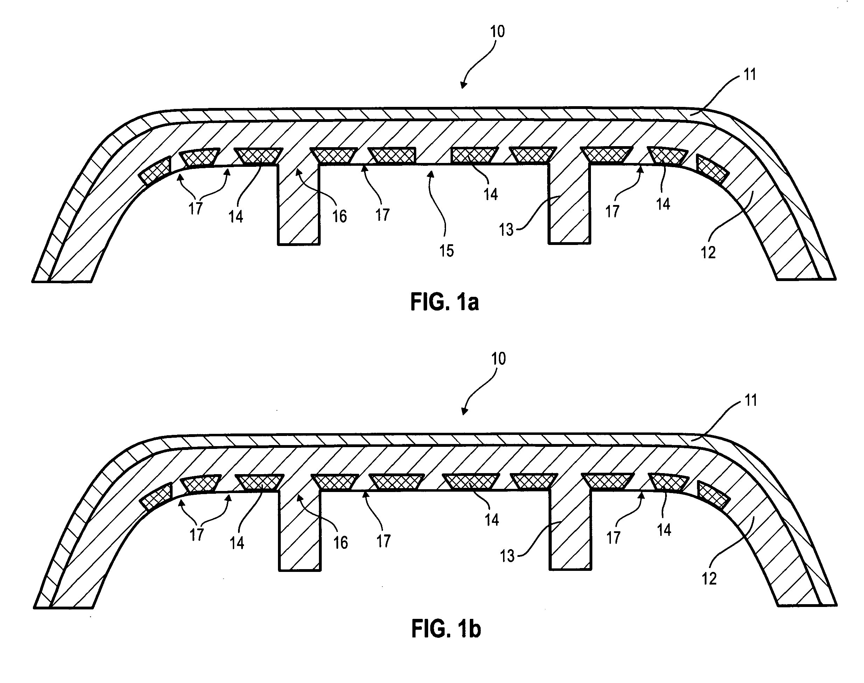

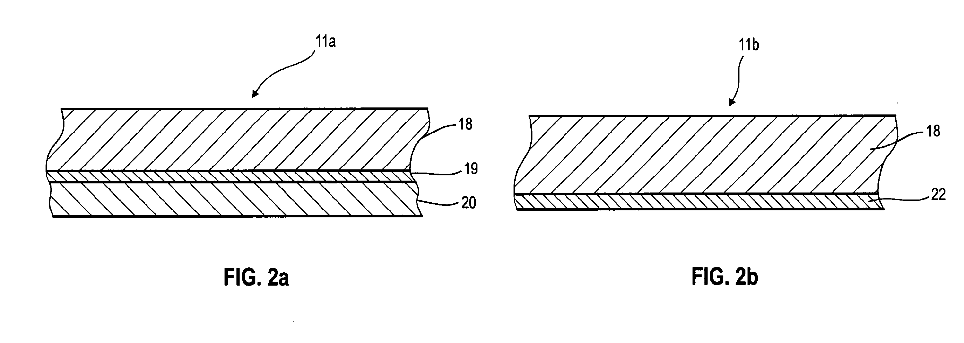

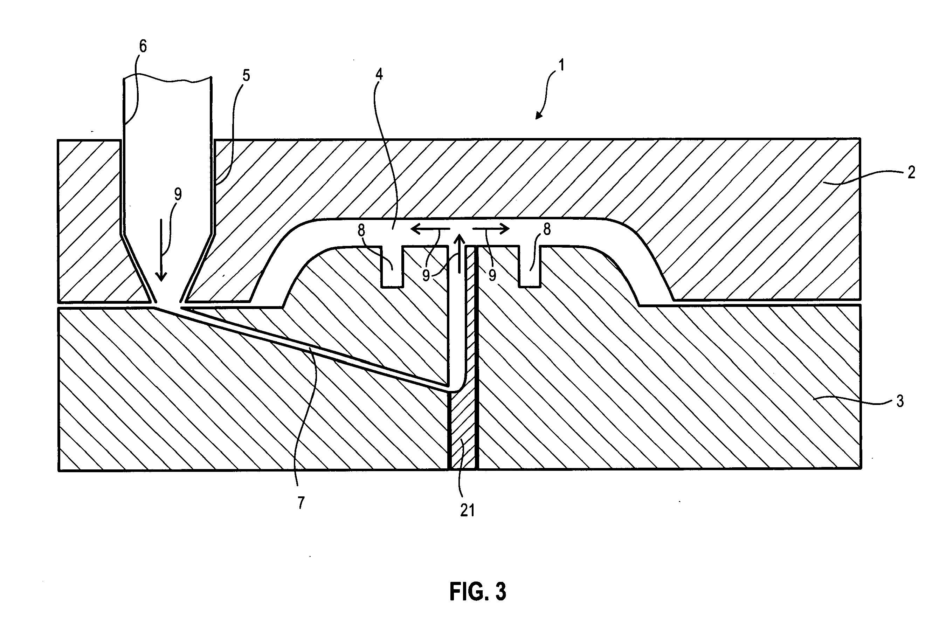

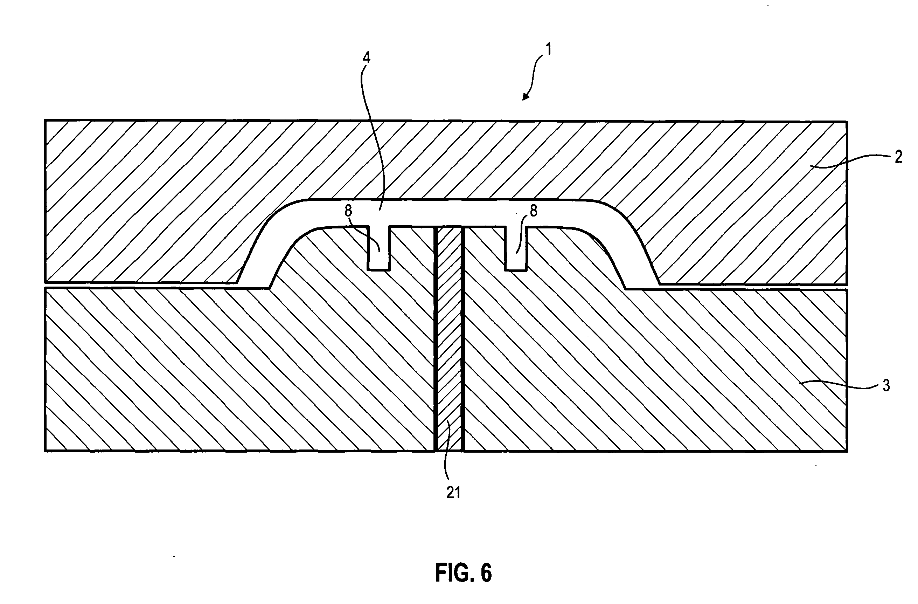

FIG 1a zeigt in einer schematischen Querschnittsdarstellung ein mit dem erfindungsgemäßen Spritzgießverfahren in einem Spritzgießwerkzeug 1 (siehe FIG 3) und unter Verwendung eines Werkstoffs 11a (siehe FIG 2a) oder eines Werkstoffs 11b (siehe FIG 2b) hergestelltes Formteil 10 gemäß der Erfindung. FIG 1b zeigt in einer vergleichbaren Darstellung ein mit dem erfindungsgemäßen Formpressverfahren in dem Formpresswerkzeug 1 gemäß FIG 6 und unter Verwendung eines Werkstoffs 11a (siehe FIG 2a) oder eines Werkstoffs 11b (siehe FIG 2b) hergestelltes, erfindungsgemäßes Formteil 10.

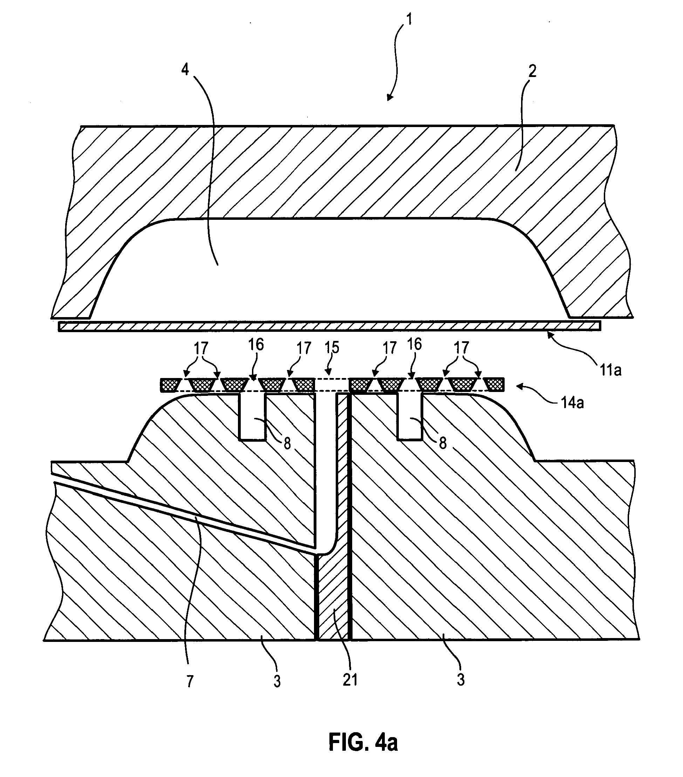

Beide Formteile 10 (FIG 1a und FIG 1b) umfasst eine aus dem Werkstoff 11a, 11b hervorgehende Dekorschicht 11 an der in einem eingebauten Zustand als Sichtseite vorgesehenen Seite des Formteils 10. Beide Formteile 10 weisen ferner einen aus einer Kunststoff-Formmasse gebildeten Träger 12 auf. Wie aus FIG 1a bzw. FIG 1b ersichtlich, ist in den Träger 12 eine duktile Einlage 14 eingebettet, die im erfindungsgemäßen Formteil 10 aus einem duktilen Material 14a, und zwar aus einer nichtmetallischen Matte, beispielsweise eine textilen Matte oder eine Prepreg-Matte, gebildet ist (siehe FIG 4a bis FIG 4c sowie FIG 5a bis FIG 5c sowie FIG 7a und7b sowie FIG 8a und 8b). Über hinterschnittene Durchbrechungen 17 in der duktilen Einlage 14, in die bei der Herstellung die Formmasse eindringt, ist die Einlage 14 fest mit dem Träger 12 verbunden.

Die Einlage 14 im Formteil 10 nach FIG 1a weist ferner eine erste Durchbrechung 15 auf, über die die Kunststoff-Formmasse bei der Herstellung aus einem Kanal 7 des Einspritzwerkzeugs 1 in die Kavität 4 eingespritzt wird (siehe FIG 3). Selbstverständlich können auch mehrere derartige erste Durchbrechungen 15 und hiermit korrespondierende Kanäle 7 vorgesehen sein. Derartige erste Durchbrechungen 15 weist das Formteil 10 nach FIG 1b nicht auf.

In beiden Formteilen 10 (FIG 1a und FIG 1b) sind in der Einlage 14 zweite Durchbrechungen 16 vorgesehen, über die beim Einspritzen bzw. Formpressen Kunststoff-Formmasse in die Formabschnitte 8 des Spritzgießwerkzeugs 1 (FIG 3) bzw. des Formpresswerkzeugs 1 (FIG 6) eindringen und diese füllen kann. Hieraus entstehen nach dem Erstarren bzw. Aushärten der Formmasse Befestigungselemente, beispielsweise die in FIG 1a/1b dargestellten Befestigungsstifte 13, über die das Formteil 10 in einem Fahrzeuginnenraum als Dekor- bzw. Verkleidungsteil angebracht werden kann.

FIG 2a und FIG 2b zeigen jeweils in einer schematischen Querschnittdarstellung einen Ausschnitt verschiedener Werkstoffe 11a und 11b zur Bildung der Dekorschicht 11 des Formteils 10 (siehe FIG 1a/1b). Beide Werkstoffe 11a, 11b sind flächig ausgebildet und stellen einen Schichtverbundwerkstoff dar. Die in beiden Werkstoffen 11a, 11b obere Schicht 18, die im fertigen Formteil 10 eine Sichtfläche bildet, ist eine Dekorlage 18, beispielsweise ein Holzfurnier und/oder eine Metalllage und/oder eine Folie, vorzugsweise eine Kunststoff- und/oder Metallfolie, und/oder eine Textillage und/oder ein Stoff.

Der Werkstoff 11a in FIG 2a umfasst drei Schichten. Auf die Dekorlage 18, hier insbesondere ein Holzfurnier und/oder eine Folie, vorzugsweise eine Kunststoff- und/oder Metallfolie, und/oder eine Textillage und/oder ein Stoff, folgt eine Klebstofflage 19, die eine Schutzschicht 20 dauerhaft an die Dekorlage 18 anbindet. Diese Schutzschicht 20 verhindert, dass empfindliche Dekorlagen 18, beispielsweise aus Holzfurnier, Folie oder Textilien, beim Einspritz- bzw. Formpressvorgang aufgrund des Drucks der Kunststoff-Formmasse beschädigt werden. Ferner dient die Schutzschicht 20 auch der Anbindung zwischen Werkstoff 11a und Kunststoff-Formmasse beim Einspritzen bzw. Formpressen und damit der Anbindung der Dekorschicht 11 am Träger 12 im Formteil 10 (siehe FIG 1a/1b). Diese Anbindung erfolgt über die beim Einspritzen bzw. Formpressen in die Schutzschicht eindringende Kunststoff-Formmasse bzw. durch direktes Zusammenwirken der Kunststoff-Formmasse mit der Schutzschicht 20. Das Vorsehen eines Klebers bzw. einer eigenen Klebeschicht ist hierfür nicht erforderlich, die Verbindung bzw. Anbindung erfolgt ohne zusätzliche Klebstoffe und ist somit klebstofffrei. Bei der Schutzschicht 20 kann es sich um eine Textilmatte auf Faserbasis, beispielsweise Holzfaser, Naturfaser oder Kunststofffaser, handeln. Die Schutzschicht 20 kann auch eine Vlieslage sein oder eine thermoplastische Kunststofflage bzw. eine Folie auf Kunststoff- und/oder Faserbasis oder ein Furnier.

Der Werkstoff 11b in FIG 2b umfasst zwei Schichten. Auf die Dekorlage 18, hier insbesondere eine Metalllage und/oder eine Folie, vorzugsweise eine Kunststoff- und/oder Metallfolie, folgt eine Klebstofflage 22, die im fertigen Formteil 10 für die dauerhafte Anbindung der Dekorschicht 11 an den Träger 12 sorgt (siehe FIG 1a/1b), das heißt einen Haftvermittler zur Anbindung der Dekorschicht 11 am Träger 12 darstellt. Hierzu bildet die Klebstofflage 22 im fertigen Formteil 10 einen Klebefilm aus.

FIG 3 zeigt ein für die Durchführung des erfindungsgemäßen Spritzgießverfahrens und damit zur Herstellung eines Formteils 10 entsprechend FIG 1a geeignetes Spritzgießwerkzeug 1. Dieses umfasst zwei Teile, ein Oberteil 2, auch als Düsenseite bezeichnet, und ein Unterteil 3, auch als Auswerferseite bezeichnet. Die Darstellung ist nur schematisch, üblicherweise weisen die beiden Teile jeweils mehrere Komponenten auf bzw. sind aus mehreren Komponenten zusammengesetzt, beispielsweise können spezielle Auswerfer (Auswerferbolzen) oder bewegliche oder abnehmbare Komponenten an hinterschnittenen Abschnitten der herzustellenden Formteile vorgesehen sein. Es versteht sich von selbst, dass Düse bzw. Düsen und/oder Auswerfer auch an der jeweils anderen Seite angebracht sein können bzw. dass Düsenseite und Auswerferseite auch vertauscht sein können. In FIG 3 sind Oberteil 2 und Unterteil 3 zugefahren. Hierbei bilden die beiden Teile 2, 3 zwischen sich einen Formhohlraum 4, die sogenannte Kavität 4, aus.

Die Kavität 4 stellt eine Negativform des mit dem Spritzgießwerkzeug 1 herzustellenden Formteils 10 (siehe FIG 1a) dar. Zur Herstellung des Formteils 10 wird eine Kunststoff-Formmasse in die Kavität 4 eingespritzt. Hierzu ist die Kavität im zugefahrenen Zustand des Spritzgießwerkzeugs 1 über einen Kanal 7 im Unterteil 3 des Spritzgießwerkzeugs 1 mit einer Düsenausnehmung 5 im Oberteil 2 des Spritzgießwerkzeugs 1 verbunden. Wird nun, wie in FIG 3 dargestellt, eine Spritzdüse 6 in die Düsenausnehmung 5 eingebracht, so kann über diese Spritzdüse 6 unter Druck stehende Kunststoff-Formmasse in den Kanal 7 und die Kavität 4 eingespritzt werden. Die Flussrichtung der eingespritzten Formmasse ist in FIG 3 schematisch durch die Pfeile 9 dargestellt. Ein Teil des Kanals 7 wird von einem Auswerfer 21 gebildet, der nach Fertigstellung des Formteils 10 zum Auswerfen des Formteils dient.

An die Kavität 4 grenzen in FIG 3 zwei Formabschnitte 8 zur Ausbildung der Befestigungselemente 13 am herzustellenden Formteil 10 an. Diese hier nur schematisch dargestellten Formabschnitte 8 können selbstverständlich eine jeweils geeignete bzw. gewünschte Form aufweisen, beispielsweise auch eine Form mit Hinterschneidungen, die im Werkzeug über entsprechend entfernbare bzw. bewegliche Komponenten realisierbar ist.

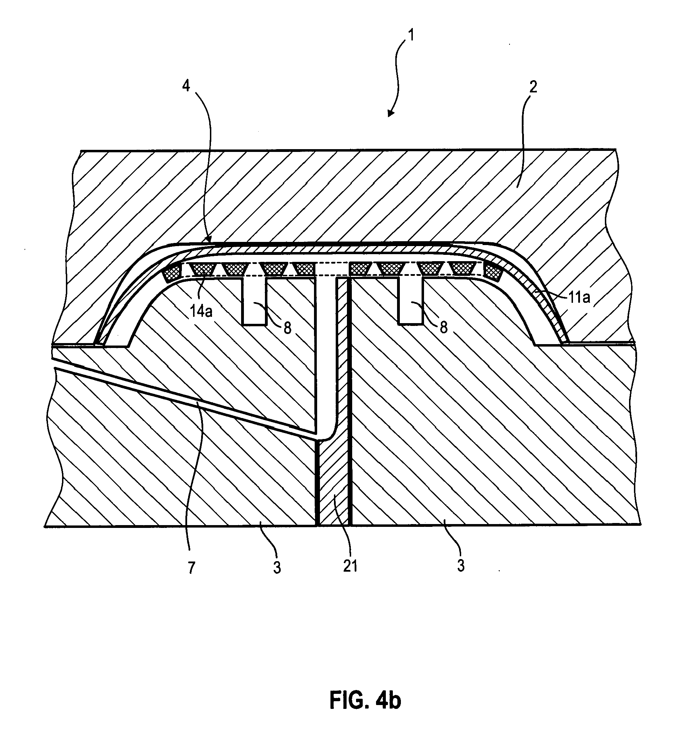

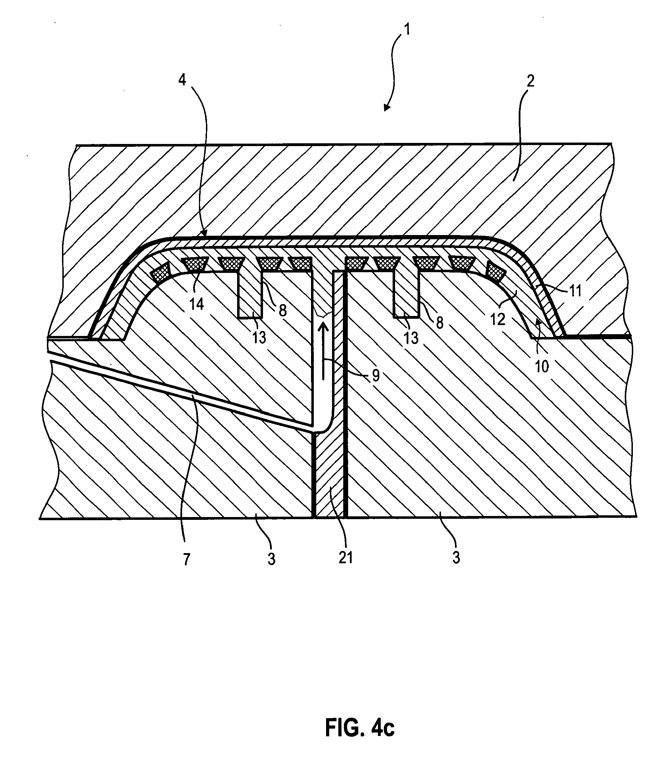

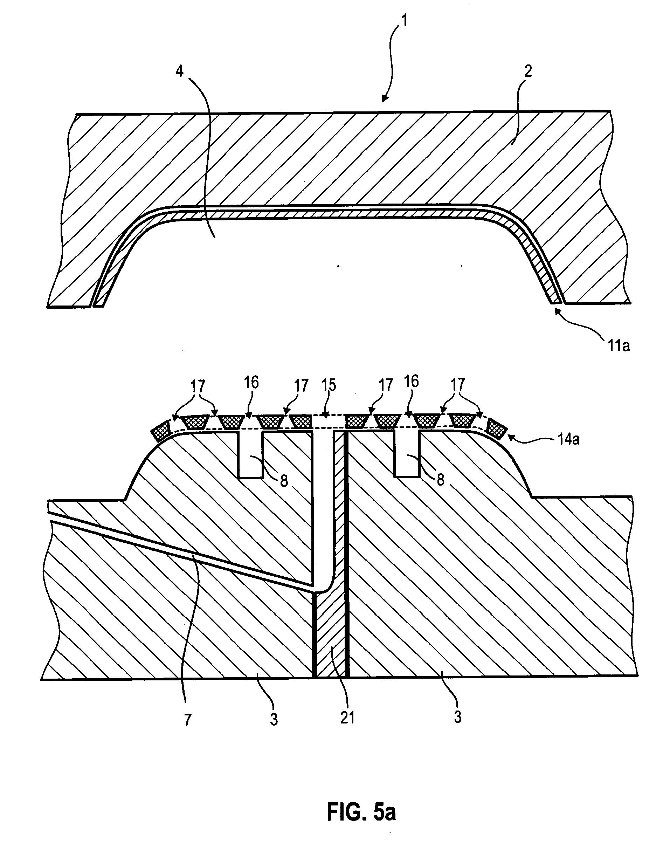

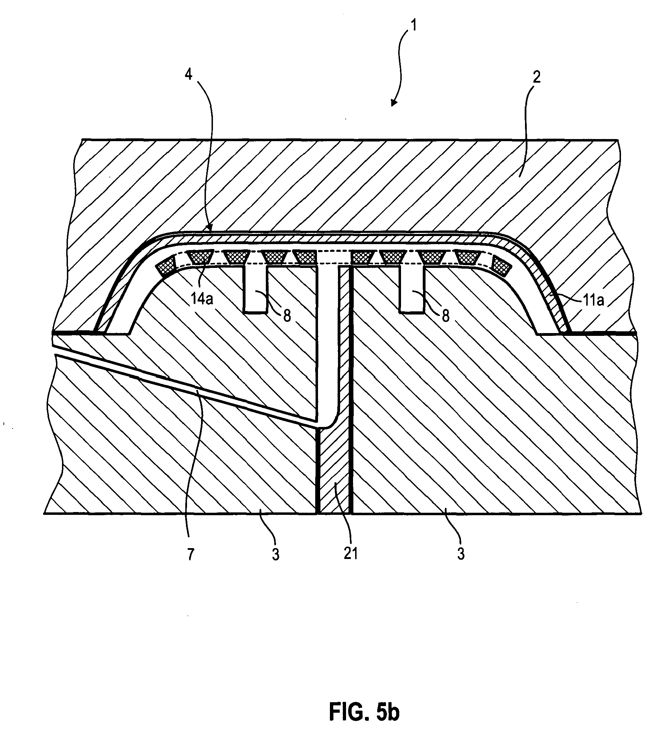

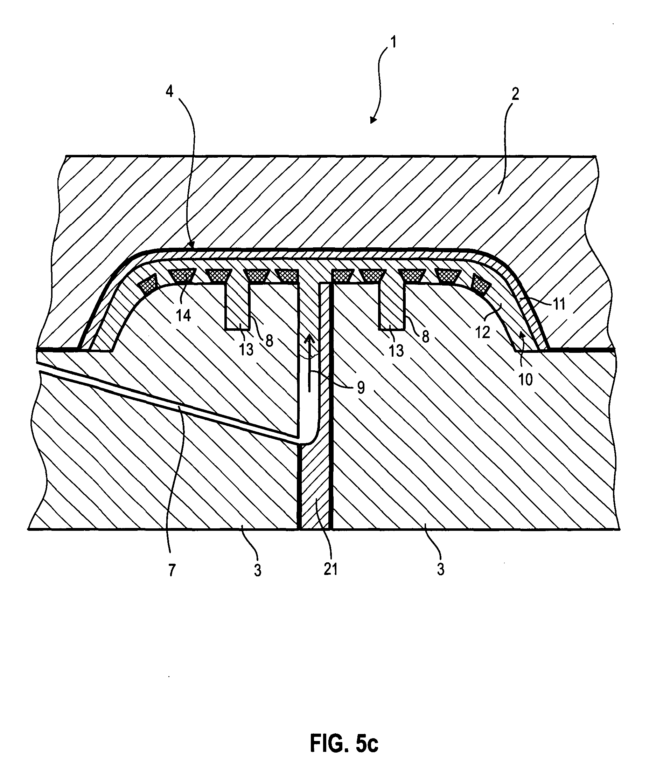

FIG 4a bis FIG 4c und FIG 5a bis FIG 5c zeigen zwei verschiedene Ausführungsvarianten des erfindungsgemäßen Spritzgießverfahrens. Jeweils sind anhand einer ausschnittsweisen Querschnittsdarstellung des Spritzgießwerkzeugs 1 gemäß FIG 3 drei aufeinanderfolgende Verfahrensstufen dargestellt. FIG 4a und FIG 5a zeigen das Spritzgießwerkzeug 1 in einem geöffneten Zustand, d.h. Oberteil 2 und Unterteil 3 sind auseinander gefahren und die Kavität 4 ist zugänglich. In FIG 4b und FIG 5b sind Oberteil 2 und Unterteil 3 zugefahren, das Spritzgießwerkzeug 1 ist bereit für den Einspritzvorgang. In FIG 4c und FIG 5c ist der Einspritzvorgang abgeschlossen, die Flussrichtung der soeben eingespritzten Formmasse ist noch schematisch durch den Pfeil 9 angedeutet.

Das Verfahren gemäß FIG 4a bis 4c umfasst folgende Schritte:
a) Bereitstellen des flächigen, noch nicht vorgeformten, jedoch gegebenenfalls zugeschnittenen und/oder vorgestanzten bzw. vorgefrästen bzw. vorgebohrten Werkstoffs 11a zur Bildung der Dekorschicht 11.
b) Bereitstellen des flächigen, noch nicht vorgeformten, jedoch gegebenenfalls zugeschnittenen und/oder vorgestanzten bzw. vorgefrästen bzw. vorgebohrten duktilen Materials 14a zur Bildung der duktilen Einlage 14.
c) Einlegen und Positionieren des flächigen Werkstoffs 11a zur Bildung der Dekorschicht 11 und des flächigen duktilen Materials 14a zur Bildung der duktilen Einlage 14 in der Kavität 4 des Spritzgießwerkzeugs 1. Insbesondere kann hierbei der Werkstoff 11a am Oberteil 2 und das duktile Material 14a am Unterteil 3 des Spritzgießwerkzeugs 1 fixiert werden. Die erste Durchbrechung 15 wird hierbei über der Öffnung des Kanals 7 angeordnet und die zweiten Durchbrechungen 16 werden über den Formabschnitten 8 im Unterteil 3 angeordnet. Diese Verfahrensstufe ist in FIG 4a dargestellt.
d) Schließen der Kavität 4, d.h. Zufahren des Spritzgießwerkzeugs 1, indem Oberteil 2 und Unterteil 3 aufeinander zu bewegt werden. Dabei werden sowohl der Werkstoff 11a zur Bildung der Dekorschicht 11 als auch das duktile Material 14a in Richtung auf ihre spätere Form im Formteil 10 angeformt. Diese Verfahrensstufe in FIG 4b dargestellt.
e) Einspritzen der den Träger bildenden Kunststoff-Formmasse in die Kavität, über Spritzdüse 6 und Kanal 7. Durch den hierbei von der Kunststoff-Formmasse ausgehenden Druck werden der Werkstoff 11a zur Bildung der Dekorschicht 11 und/oder das duktile Material 14a gegen die Wandung der Kavität 4 gedrückt und nehmen dadurch ihre für das fertige Formteil vorgesehene Form an. Diese Verfahrensstufe ist in FIG 4c dargestellt.
f) Erstarren bzw. Aushärten der eingespritzten Kunststoff-Formmasse, wodurch der Träger 12 gebildet wird. Insgesamt bildet sich dadurch der feste Verbund aus Dekorschicht 11, Träger 12 und duktiler Einlage 14 und damit das herzustellende Formteil 10 gemäß FIG 1a.
g) Abschließend kann das Formteil 10 aus dem Spritzgießwerkzeug 1 ausgeworfen und gegebenenfalls noch nachbearbeitet werden, beispielsweise durch Schneiden und/oder Schleifen und/oder durch das Aufbringen einer Oberflächenbeschichtung, beispielsweise einer Lackierung.

Das Verfahren gemäß FIG 5a bis 5c umfasst folgende Schritte:
a) Bereitstellen des entsprechend seiner späteren Form als Dekorschicht 11 im Formteil 10 vorgeformten Werkstoffs 11a. Die Vorformung kann beispielsweise in einem Presswerkzeug erfolgen.
b) Bereitstellen des entsprechend seiner späteren Form als duktile Einlage 14 im Formteil 10 vorgeformten duktilen Materials 14a. Die Vorformung kann beispielsweise in einem Presswerkzeug erfolgen.
c) Einlegen und Positionieren des vorgeformten Werkstoffs 11a zur Bildung der Dekorschicht 11 und des vorgeformten duktilen Materials 14a zur Bildung der duktilen Einlage 14 in der Kavität 4 des Spritzgießwerkzeugs 1. Insbesondere kann hierbei der Werkstoff 11a am Oberteil 2 und das duktile Material 14a am Unterteil 3 des Spritzgießwerkzeugs 1 fixiert werden. Die erste Durchbrechung 15 wird hierbei über der Öffnung des Kanals 7 angeordnet und die zweiten Durchbrechungen 16 werden über den Formabschnitten 8 im Unterteil 3 angeordnet. Diese Verfahrensstufe ist in FIG 5a dargestellt. Die Form des Werkstoffs 11a und die Form des duktilen Materials 14a korrespondiert hierbei mit der Form der Kavität 4 des Spritzgießwerkzeugs 1.
d) Schließen der Kavität 4, d.h. Zufahren des Spritzgießwerkzeugs 1, indem Oberteil 2 und Unterteil 3 aufeinander zu bewegt werden. Eine weitere Formung von Werkstoff 11 a und duktilem Material 14a erfolgt hierbei nicht. Diese Verfahrensstufe in FIG 5b dargestellt.
e) Einspritzen der den Träger bildenden Kunststoff-Formmasse in die Kavität, über Spritzdüse 6 und Kanal 7. Eine weitere Formung von Werkstoff 11a und duktilem Material 14a erfolgt hierbei nicht, Werkstoff 11a und duktiles Material 14a weisen bereits ihre endgültige Form auf. Der Einspritzvorgang dient somit nur der Vorbereitung der Ausbildung des Trägers 12. Diese Verfahrensstufe ist in FIG 5c dargestellt.
f) Erstarren bzw. Aushärten der eingespritzten Kunststoff-Formmasse, wodurch der Träger 12 gebildet wird. Insgesamt bildet sich dadurch der feste Verbund aus Dekorschicht 11, Träger 12 und duktiler Einlage 14 und damit das herzustellende Formteil 10 gemäß FIG 1a.
g) Abschließend kann das Formteil 10 aus dem Spritzgießwerkzeug 1 ausgeworfen und gegebenenfalls noch nachbearbeitet werden, beispielsweise durch Schneiden und/oder Schleifen und/oder durch das Aufbringen einer Oberflächenbeschichtung, beispielsweise einer Lackierung.

In einer weiteren alternativen Spritzgieß-Verfahrensvariante kann auch lediglich der Werkstoff 11a zur Bildung der Dekorschicht 11 vorgeformt sein und das duktile Material 14a liegt in flächiger Ausbildung entsprechend dem Verfahren nach FIG 4a bis FIG 4c vor. Oder lediglich das duktile Material 14a ist vorgeformt und der Werkstoff 11 a liegt in flächiger Ausbildung entsprechend dem Verfahren nach FIG 4a bis FIG 4c vor. Die einzelnen Verfahrensschritte ergeben sich in beiden Fällen direkt aus den Erläuterungen zu den Verfahrensvarianten nach FIG 4a bis 4c und FIG 5a bis FIG 5c.

FIG 6 zeigt ein für die Durchführung des erfindungsgemäßen Formpressverfahrens und damit zur Herstellung des Formteils 10 entsprechend FIG 1b geeignetes Formpresswerkzeug 1. Hierbei handelt es sich lediglich um eine schematische Darstellung, es kann sich beispielsweise auch um ein Tauchkantenwerkzeug handeln. Das Formpresswerkzeug 1 umfasst wie das Spritzgießwerkzeug 1 nach FIG 3 zwei Teile, ein Oberteil 2 und ein Unterteil 3. Die Darstellung ist nur schematisch, üblicherweise weisen die beiden Teile jeweils mehrere Komponenten auf bzw. sind aus mehreren Komponenten zusammengesetzt, beispielsweise können spezielle Auswerfer (Auswerferbolzen) oder bewegliche oder abnehmbare Komponenten an hinterschnittenen Abschnitten der herzustellenden Formteile vorgesehen sein.

Die Herstellung eines Formteils mit diesem Formpresswerkzeug 1 erfolgt grundsätzlich dadurch, dass eine Formmasse bei geöffnetem Werkzeug 1 zwischen Oberteil 2 und Unterteil 3 eingelegt wird und anschließend Oberteil 2 und Unterteil 3 aufeinander zu bewegt werden und dadurch das Formteil durch entsprechendes Pressen gebildet wird. Nach dem Pressen des Formteils wird das Formteil mit Hilfe eines Auswerfers 21 aus dem Werkzeug 1 entnommen.

In FIG 6 sind Oberteil 2 und Unterteil 3 zugefahren. Hierbei bilden die beiden Teile 2, 3 zwischen sich einen Hohlraum, den Formraum 4 aus (vergleichbar der Kavität 4 im Spritzgießwerkzeug 1 gemäß FIG 3). Dieser bestimmt die Form des mit dem Werkzeug 1 hergestellten Formteils. Der Formraum 4 stellt somit eine Negativform eines mit dem Formpresswerkzeug 1 herzustellenden Formteils 10 (siehe FIG 1b) dar.

An den Formraum 4 grenzen in FIG 6 zwei Formabschnitte 8 zur Ausbildung jeweils eines Befestigungselements am herzustellenden Formteil 10 an. Diese hier nur schematisch dargestellten Formabschnitte 8 können selbstverständlich eine jeweils geeignete bzw. gewünschte Form aufweisen, beispielsweise auch eine Form mit Hinterschneidungen, die im Werkzeug über entsprechend entfernbare bzw. bewegliche Komponenten realisierbar ist.

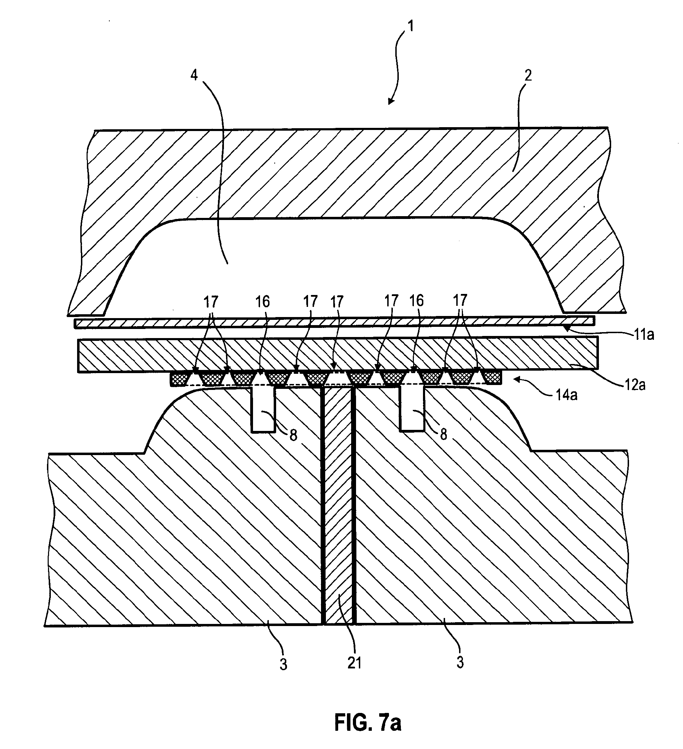

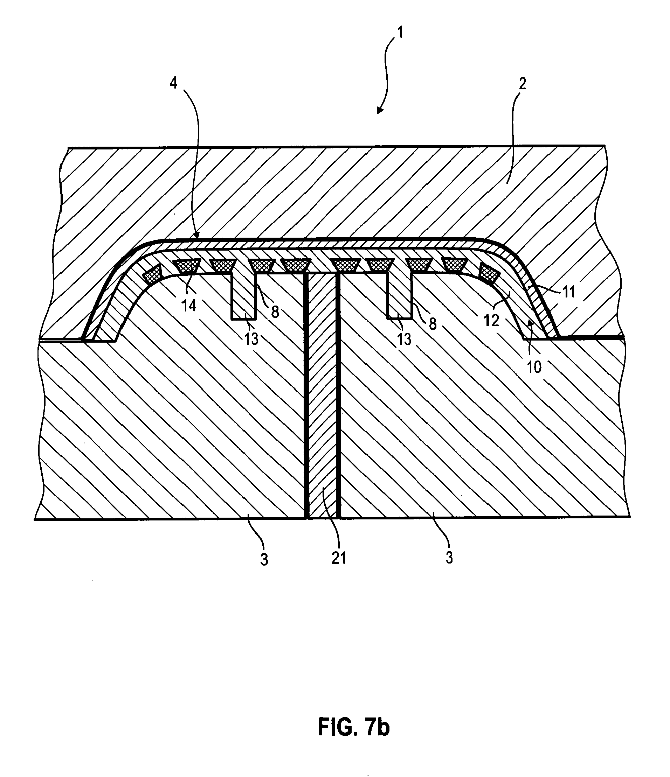

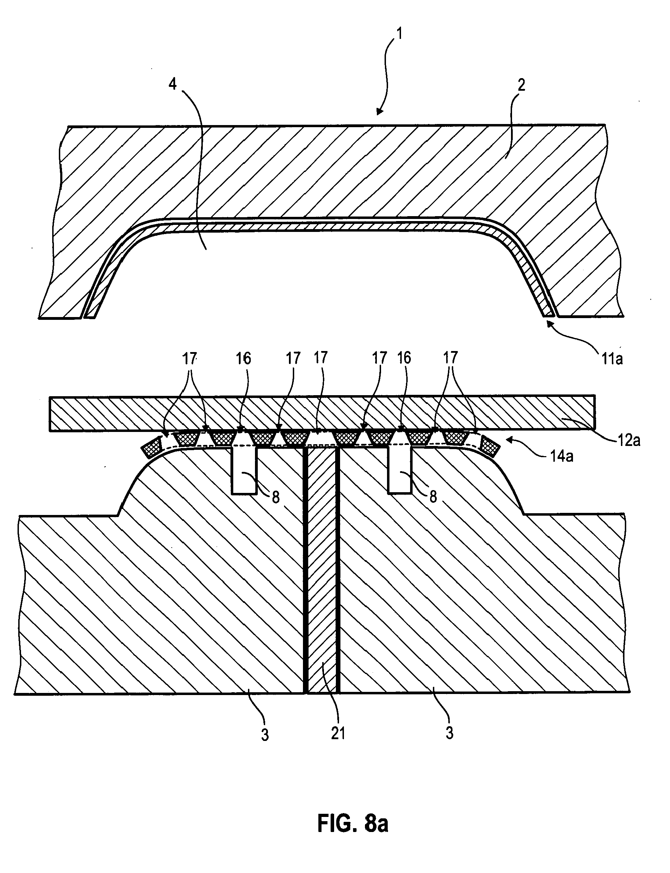

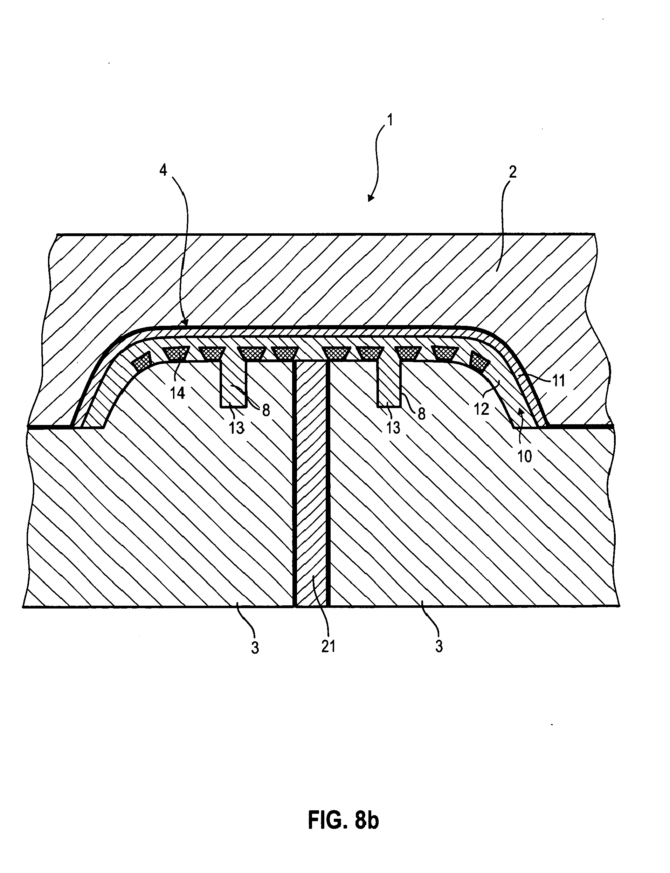

FIG 7a und FIG 7b und FIG 8a und FIG 8b zeigen zwei verschiedene Ausführungsvarianten des erfindungsgemäßen Formpressverfahrens. Jeweils sind anhand einer ausschnittsweisen Querschnittsdarstellung des Formpresswerkzeugs 1 gemäß FIG 6 zwei aufeinanderfolgende Verfahrensstufen dargestellt. FIG 7a und FIG 8a zeigen das Formpresswerkzeug 1 in einem geöffneten Zustand, d.h. Oberteil 2 und Unterteil 3 sind auseinander gefahren und der Formraum 4 ist zugänglich. In FIG 7b und FIG 8b ist der Formpressvorgang abgeschlossen, das Oberteil 2 und das Unterteil 3 wurden aufeinander zu bewegt und dadurch das Formteil aus den eingelegten Komponenten in der gewünschten Form gepresst. Das Formpresswerkzeug 1 ist dementsprechend in FIG 7b und FIG 8b jeweils geschlossen.

Das Verfahren gemäß FIG 7a und 7b umfasst folgende Schritte:
a) Bereitstellen eines flächigen, noch nicht vorgeformten, jedoch gegebenenfalls zugeschnittenen und/oder vorgestanzten bzw. vorgefrästen bzw. vorgebohrten Werkstoffs 11a zur Bildung der Dekorschicht 11.
b) Bereitstellen eines flächigen, noch nicht vorgeformten, jedoch gegebenenfalls zugeschnittenen und/oder vorgestanzten bzw. vorgefrästen bzw. vorgebohrten duktilen Materials 14a zur Bildung der duktilen Einlage 14.
c) Bereitstellen einer Kunststoff-Formmasse 12a zur Bildung des Trägers 12.
d) Einlegen und Positionieren des flächigen Werkstoffs 11a zur Bildung der Dekorschicht 11, der den Träger 12 bildenden Kunststoff-Formmasse 12a und des flächigen duktilen Materials 14a zur Bildung der duktilen Einlage 14 in den Formraum 4 des Formpresswerkzeugs 1. Insbesondere kann hierbei der Werkstoff 11a am Oberteil 2 und das duktile Material 14a am Unterteil 3 des Formpresswerkzeugs 1 fixiert werden, die Kunststoff-Formmasse 12a kann auf und/oder neben dem duktilen Material 14a angeordnet werden. Die zweiten Durchbrechungen 16 im duktilen Material 14a werden hierbei über den Formabschnitten 8 im Unterteil 3 angeordnet. Diese Verfahrensstufe ist in FIG 7a dargestellt.
e) Schließen des Formraums 4, d.h. Zufahren des Formpresswerkzeugs 1, indem Oberteil 2 und Unterteil 3 aufeinander zu bewegt werden. Dabei wird aufgrund des hierbei entstehenden Pressdrucks die Kunststoff-Formmasse 12a und mit ihr sowohl der Werkstoff 11a zur Bildung der Dekorschicht 11 als auch das duktile Material 14a in die vorgegebene Form gepresst. Die eigentliche Formgebung erfolgt, indem der Werkstoff 11a zur Bildung der Dekorschicht 11 und/oder das duktile Material 14a und/oder die Kunststoff-Formmasse 12a gegen die Wandung des Formraums 4 gedrückt werden und dadurch ihre für das fertige Formteil vorgesehene Form einnehmen. Diese Verfahrensstufe ist in FIG 7b dargestellt.
f) Erstarren bzw. Aushärten der Kunststoff-Formmasse 12a, wodurch der Träger 12 gebildet wird. Insgesamt bildet sich dadurch der feste Verbund aus Dekorschicht 11, Träger 12 und duktiler Einlage 14 und damit das herzustellende Formteil 10 gemäß FIG 1b.
g) Abschließend kann das Formteil 10 aus dem Formpresswerkzeug 1 ausgeworfen und gegebenenfalls noch nachbearbeitet werden, beispielsweise durch Schneiden und/oder Schleifen und/oder durch das Aufbringen einer Oberflächenbeschichtung, beispielsweise einer Lackierung.

Das Verfahren gemäß FIG 8a und 8b umfasst folgende Schritte:
a) Bereitstellen des entsprechend seiner späteren Form als Dekorschicht 11 im Formteil 10 vorgeformten Werkstoffs 11a. Die Vorformung kann beispielsweise in einem Presswerkzeug erfolgen.
b) Bereitstellen des entsprechend seiner späteren Form als duktile Einlage 14 im Formteil 10 vorgeformten duktilen Materials 14a. Die Vorformung kann beispielsweise in einem Presswerkzeug erfolgen.
c) Bereitstellen einer Kunststoff-Formmasse 12a zur Bildung des Trägers 12.
d) Einlegen und Positionieren des vorgeformten Werkstoffs 11a zur Bildung der Dekorschicht 11 und des vorgeformten duktilen Materials 14a zur Bildung der duktilen Einlage 14 in den Formraum 4 des Formpresswerkzeugs 1. Insbesondere kann hierbei der Werkstoff 11a am Oberteil 2 und das duktile Material 14a am Unterteil 3 des Formpresswerkzeugs 1 fixiert werden. Die zweiten Durchbrechungen 16 werden hierbei über den Formabschnitten 8 im Unterteil 3 angeordnet. Die Form des Werkstoffs 11a und die Form des duktilen Materials 14a korrespondieren hierbei mit der Form des Formraums 4 des Formpresswerkzeugs 1. Zwischen duktilem Material 14a und Werkstoff 11a, in der Regel auf dem duktilen Material 14a, wird die Kunststoff-Formmasse 12a angeordnet. Diese Verfahrensstufe ist in FIG 8a dargestellt.
e) Schließen des Formraums 4, d.h. Zufahren des Formpresswerkzeugs 1, indem Oberteil 2 und Unterteil 3 aufeinander zu bewegt werden. Dabei wird aufgrund des hierbei entstehenden Pressdrucks die Kunststoff-Formmasse 12a in die vorgegebene Form gepresst. Eine weitere Formung von Werkstoff 11a und duktilem Material 14a erfolgt hierbei nicht, Werkstoff 11a und duktiles Material 14a weisen bereits ihre endgültige Form auf. Der Formpressvorgang dient somit nur der Ausbildung des Trägers 12. Diese Verfahrensstufe ist in FIG 8b dargestellt.
f) Erstarren bzw. Aushärten der Kunststoff-Formmasse, wodurch der Träger 12 gebildet wird. Insgesamt bildet sich dadurch der feste Verbund aus Dekorschicht 11, Träger 12 und duktiler Einlage 14 und damit das herzustellende Formteil 10 gemäß FIG 1b.
g) Abschließend kann das Formteil 10 aus dem Formpresswerkzeug 1 ausgeworfen und gegebenenfalls noch nachbearbeitet werden, beispielsweise durch Schneiden und/oder Schleifen und/oder durch das Aufbringen einer Oberflächenbeschichtung, beispielsweise einer Lackierung.

In einer weiteren alternativen Formpress-Verfahrensvariante kann auch lediglich der Werkstoff 11a zur Bildung der Dekorschicht 11 vorgeformt sein und das duktile Material 14a liegt in flächiger Ausbildung entsprechend dem Verfahren nach FIG 7a und FIG 7b vor. Oder lediglich das duktile Material 14a ist vorgeformt und der Werkstoff 11a liegt in flächiger Ausbildung entsprechend dem Verfahren nach FIG 7a und FIG 7b vor. Die einzelnen Verfahrensschritte ergeben sich in beiden Fällen direkt aus den Erläuterungen zu den Verfahrensvarianten nach FIG 7a und 7b und FIG 8a und FIG 8b.

Bezugszeichenliste
- 1: Werkzeug, Spritzgießwerkzeug bzw. Formpresswerkzeug
- 2: Düsenseite, Oberteil des Werkzeugs 1
- 3: Auswerferseite, Unterteil des Werkzeugs 1
- 4: Kavität, Formhohlraum, Formraum des Werkzeugs 1
- 5: Düsenausnehmung
- 6: Spritzdüse
- 7: Kanal
- 8: Formabschnitt zur Ausbildung eines Befestigungselements
- 9: Flussrichtung der eingespritzten Kunststoff-Formmasse
- 10: Formteil
- 11: Dekorschicht
- 11a: Werkstoff zur Bildung der Dekorschicht 11
- 11b: Werkstoff zur Bildung der Dekorschicht 11
- 12: Träger
- 12a: Kunststoff-Formmasse zu Bildung des Trägers 12
- 13: Befestigungselement, Befestigungsstift
- 14: duktile Einlage
- 14a: duktiles Material zur Bildung der duktilen Einlage 14
- 15: erste Durchbrechung
- 16: zweite Durchbrechung
- 17: hinterschnittene Durchbrechung
- 18: Dekorlage, obere Schicht
- 19: Klebstofflage
- 20: Schutzschicht
- 21: Auswerfer
- 22: Klebstofflage

## Patentansprüche

1. Formteil (10), insbesondere Dekorteil und/oder Verkleidungsteil für einen Fahrzeuginnenraum,
umfassend einen Träger (12) aus Kunststoff, eine Dekorschicht (11) und eine duktile Einlage (14) aus duktilem Material (14a),
**dadurch gekennzeichnet, dass**
das duktile Material (14a) zur Bildung der duktilen Einlage (14) eine nichtmetallische Matte, insbesondere eine textile Matte oder eine Prepreg-Matte, ist oder umfasst.

2. Einspritzverfahren zum Herstellen von Formteilen (10), insbesondere Dekorteilen und/oder Verkleidungsteilen für einen Fahrzeuginnenraum, insbesondere von Formteilen nach Anspruch 1,
wobei die Formteile (10) einen Träger (12) aus Kunststoff, eine Dekorschicht (11) und eine duktile Einlage (14) aus duktilem Material (14a) umfassen,
**gekennzeichnet durch** folgende Schritte:
a) Einlegen und/oder Positionieren eines die Dekorschicht (11) bildenden Werkstoffs (11a) und des duktilen Materials (14a) zur Bildung der duktilen Einlage (14) in einer geöffneten Kavität (4) eines Spritzgießwerkzeugs (1);
b) Schließen der Kavität (4);
c) Einspritzen einer den Träger (12) ausbildenden Kunststoff-Formmasse in die Kavität (4); und
d) Erstarren oder Aushärten der eingespritzten Kunststoff-Formmasse,
wobei diese zusammen mit dem die Dekorschicht (11) bildenden Werkstoff (11a) und dem duktilen Material (14a) zur Bildung der duktilen Einlage (14) das Formteil (10) ausbildet.

3. Verfahren nach Anspruch 2,
**dadurch gekennzeichnet,**
**dass** der die Dekorschicht (11) bildende Werkstoff (11a) beim Einlegen und/oder Positionieren in der Kavität (4) flächig ausgebildet ist und/oder noch nicht entsprechend seiner späteren Form im Formteil (10) ausgebildet ist.

4. Verfahren nach Anspruch 3,
**dadurch gekennzeichnet,**
**dass** der eingelegte und/oder positionierte Werkstoff (11a) beim Schließen der Kavität (4) angeformt wird in Richtung auf seine spätere Form im Formteil (10).

5. Verfahren nach Anspruch 3 oder 4,
**dadurch gekennzeichnet,**
**dass** beim Einspritzen der Kunststoff-Formmasse der von der Kunststoff-Formmasse ausgehende Druck den Werkstoff (11a) gegen die Kavitätswandung drückt und damit die Dekorschicht (11) des Formteils (10) in einer durch die Kavitätswandung vorgegebenen Form ausgebildet wird.

6. Verfahren nach Anspruch 2,
**dadurch gekennzeichnet,**
**dass** der die Dekorschicht (11) bildende Werkstoff (11a) vor dem Einlegen und/oder Positionieren in der Kavität (4) vorgeformt wird entsprechend seiner späteren Form im Formteil (10), insbesondere in einem Presswerkzeug, und
**dass** die Vorform des Werkstoffs (11a) beim Einlegen und/oder Positionieren mit der Form der Kavität (4) korrespondiert.

7. Verfahren nach einem der Ansprüche 2 bis 6,
**dadurch gekennzeichnet,**
**dass** das duktile Material (14a) zur Bildung der duktilen Einlage (14) beim Einlegen und/oder Positionieren in der Kavität (4) flächig ausgebildet ist und/oder noch nicht entsprechend seiner späteren Form im Formteil (10) ausgebildet ist.

8. Verfahren nach Anspruch 7,
**dadurch gekennzeichnet,**
**dass** das eingelegte und/oder positionierte duktile Material (14a) beim Schließen der Kavität (4) angeformt wird in Richtung auf seine spätere Form im Formteil (10).

9. Verfahren nach Anspruch 7 oder 8,
**dadurch gekennzeichnet,**
**dass** beim Einspritzen der Kunststoff-Formmasse der von der Kunststoff-Formmasse ausgehende Druck das duktile Material (14a) gegen die Kavitätswandung drückt und damit die duktile Einlage (14) des Formteils (10) in einer durch die Kavitätswandung vorgegebenen Form ausgebildet wird.

10. Verfahren nach einem der Ansprüche 2 bis 6,
**dadurch gekennzeichnet,**
**dass** das die duktile Einlage (14) bildende Material (14a) vor dem Einlegen und/oder Positionieren in der Kavität (4) vorgeformt wird entsprechend seiner späteren Form im Formteil (10), insbesondere in einem Presswerkzeug, und
**dass** die Vorform des duktilen Materials (14a) beim Einlegen und/oder Positionieren mit der Form der Kavität (4) korrespondiert.

11. Verfahren nach einem der Ansprüche 2 bis 10,
**dadurch gekennzeichnet,**
**dass** das duktile Material (14a) zur Bildung der duktilen Einlage (14) mindestens eine erste Durchbrechung (15) aufweist, durch die nach dem Einlegen und/oder Positionieren in der Kavität (4) die Kunststoff-Formmasse in die Kavität (4) gespritzt wird.

12. Formpressverfahren zum Herstellen von Formteilen (10), insbesondere Dekorteilen und/oder Verkleidungsteilen für einen Fahrzeuginnenraum, insbesondere von Formteilen nach Anspruch 1,
wobei die Formteile (10) einen Träger (12) aus Kunststoff, eine Dekorschicht (11) und eine duktile Einlage (14) aus duktilem Material (14a) umfassen,
**gekennzeichnet durch** folgende Schritte:
a) Einlegen und/oder Positionieren eines die Dekorschicht (11) bildenden Werkstoffs (11a), einer den Träger (12) bildenden Kunststoff-Formmasse (12a) und des duktilen Materials (14a) zur Bildung der duktilen Einlage (14) in den geöffneten Formraum (4) eines Formpresswerkzeugs (1);
b) Schließen des Formraums (4);
c) Erstarren oder Aushärten der Kunststoff-Formmasse (12a), wobei diese zusammen mit dem die Dekorschicht (11) bildenden Werkstoff (11a) und dem duktilen Material (14a) zur Bildung der duktilen Einlage (14) das Formteil (10) ausbildet.

13. Verfahren nach Anspruch 12,
**dadurch gekennzeichnet,**
**dass** der die Dekorschicht (11) bildende Werkstoff (11a) beim Einlegen und/oder Positionieren in den Formraum (4) flächig ausgebildet ist und/oder noch nicht entsprechend seiner späteren Form im Formteil (10) ausgebildet ist.

14. Verfahren nach Anspruch 13,
**dadurch gekennzeichnet,**
**dass** der eingelegte und/oder positionierte Werkstoff (11a) beim Schließen der Formwerkzeugs (4) von der Kunststoff-Formmasse gegen die Formraumwandung gedrückt wird und damit die Dekorschicht (11) des Formteils (10) in einer durch die Formraumwandung vorgegebenen Form ausgebildet wird.

15. Verfahren nach Anspruch 12,
**dadurch gekennzeichnet,**
**dass** der die Dekorschicht (11) bildende Werkstoff (11a) vor dem Einlegen und/oder Positionieren in den Formraum (4) vorgeformt wird entsprechend seiner späteren Form im Formteil (10), insbesondere in einem Presswerkzeug, und
**dass** die Vorform des Werkstoffs (11a) beim Einlegen und/oder Positionieren mit der Form des Formraums (4) korrespondiert.

16. Verfahren nach einem der Ansprüche 12 bis 15,
**dadurch gekennzeichnet,**
**dass** das duktile Material (14a) zur Bildung der duktilen Einlage (14) beim Einlegen und/oder Positionieren in den Formraum (4) flächig ausgebildet ist und/oder noch nicht entsprechend seiner späteren Form im Formteil (10) ausgebildet ist.

17. Verfahren nach Anspruch 16,
**dadurch gekennzeichnet,**
**dass** das eingelegte und/oder positionierte duktile Material (14a) beim Schließen des Formraums (4) von der Kunststoff-Formmasse gegen die Formraumwandung gedrückt wird und damit die duktile Einlage (14) des Formteils (10) in einer durch die Formraumwandung vorgegebenen Form ausgebildet wird.

18. Verfahren nach einem der Ansprüche 12 bis 15,
**dadurch gekennzeichnet,**
**dass** das die duktile Einlage (14) bildende Material (14a) vor dem Einlegen und/oder Positionieren in den Formraum (4) vorgeformt wird entsprechend seiner späteren Form im Formteil (10), insbesondere in einem Presswerkzeug, und
**dass** die Vorform des duktilen Materials (14a) beim Einlegen und/oder Positionieren mit der Form des Formraums (4) korrespondiert.

19. Verfahren nach einem der Ansprüche 12 bis 18,
**dadurch gekennzeichnet,**
**dass** die den Träger (12) ausbildende Kunststoff-Formmasse (12a) ein Bulk moulding compound BMC oder ein Sheet moulding compound SMC oder ein glasfaserverstärkter Kunststoff GFK, beispielsweise ein glasmattenverstärkter Thermoplast GMT, ist oder diesen umfasst.

20. Verfahren nach einem der Ansprüche 2 bis 19,
**dadurch gekennzeichnet,**
**dass** das duktile Material (14a) zur Bildung der duktilen Einlage (14) ein Metall, vorzugsweise Aluminium oder Stahl, oder eine nichtmetallische Matte, insbesondere eine textile Matte oder eine Prepreg-Matte, ist oder umfasst.

21. Verfahren nach einem der Ansprüche 2 bis 20,
**dadurch gekennzeichnet,**
**dass** das duktile Material (14a) zur Bildung der duktilen Einlage (14) mindestens eine zweite Durchbrechung (16) aufweist, durch die Kunststoff-Formmasse in mindestens einen an die Kavität (4) angrenzenden Formabschnitt (8) des Werkzeugs (1) eintritt zur Ausbildung mindestens eines Befestigungselements (13) am Träger (12) des Formteils (10), bestimmt für die Anbringung des Formteils (10), insbesondere in einem Fahrzeuginnenraum.

22. Verfahren nach einem der Ansprüche 2 bis 21,
**dadurch gekennzeichnet,**
**dass** das duktile Material (14a) eine oder mehrere hinterschnittene Vertiefungen und/oder Durchbrechungen (17) aufweist, in die die Kunststoff-Formmasse eindringt und beim Aushärten eine feste Verbindung zwischen dem von der Kunststoff-Formmasse gebildeten Träger (12) und der duktilen Einlage (14) ausbildet.

23. Formteil nach Anspruch 1 oder Verfahren nach einem der Ansprüche 2 bis 22,
**dadurch gekennzeichnet,**
**dass** der die Dekorschicht (11) bildende Werkstoff (11a, 11b) ein Verbundwerkstoff umfassend eine Dekorlage (18), insbesondere ein Holzfurnier und/oder eine Metalllage und/odex eine Folie, vorzugsweise eine Kunststoff- und/oder Metallfolie, und/oder eine Textillage und/oder ein Stoff, ist.

24. Formteil oder Verfahren nach Anspruch 23,
**dadurch gekennzeichnet**,
das der die Dekorschicht (11) bildende Werkstoff (11a) als weitere Lagen eine Klebstofflage (19) und eine über die Klebstofflage (19) an der Dekorschicht (11) angebundene Schutzschicht (20), insbesondere eine Textilmatte auf Faserbasis oder eine Vlieslage oder eine thermoplastische Kunststofflage oder eine Folie auf Kunststoff- und/oder Faserbasis oder ein Furnier, umfasst.

25. Formteil oder Verfahren nach Anspruch 23,
**dadurch gekennzeichnet**,
das der die Dekorschicht (11) bildende Werkstoff (11b) als weitere Lage eine Klebstofflage (22) zur Anbindung der Dekorschicht (11) an den Träger (12) umfasst.

26. Formteil oder Verfahren nach einem der vorhergehenden Ansprüche,
**dadurch gekennzeichnet,**
**dass** eine oder die den Träger (12) ausbildende Kunststoff-Formmasse ein Thermoplast oder ein Elastomer oder ein Duroplast ist oder diesen umfasst.
